# EUROPEAN PATENT APPLICATION

(11) **EP 4 842 031 A1**
(43) Date of publication of application: **18.11.2026**
(21) Application number: 26178318.7
(22) Date of filing: 12.05.2026
(51) Int. Cl.: H04W 12/106, H04W 12/041, H04L 9/32, H04W 12/0431, H04L 9/40, H04W 12/033, H04W 12/04, H04W 12/06

(54) **HOME ACCESS STRATUM (HAS) COMMUNICATION**

(30) Priority: 12.05.2025 GR 20250100357; 12.05.2025 GR 20250100358; 16.05.2025 GR 20250100373; 16.05.2025 GR 20250100374; 16.05.2025 GR 20250100375
(71) Applicant: Telefonaktiebolaget LM Ericsson (publ), 164 83 Stockholm (SE)
(72) Inventor: Castellanos Zamora, David, 28045 Madrid (ES); Ståhl, Per, 223 62 Lund (SE); Hanhisalo, Markus, 02420 Jorvas (FI); Flygare, Helena, 223 62 Lund (SE); Alameddine, Hyame, Saint-Laurent, H4S 0B6 (CA); Tsiatsis, Vlasios, 164 80 Stockholm (SE); Lehtovirta, Vesa, 02420 Jorvas (FI); Eriksson, Mikael, 417 56 Göteborg (SE); Nour, Boubakr, Saint-Laurent, H4S 0B6 (CA)
(74) Representative: Ericsson

(57) **Abstract**

Embodiments include methods performed by a first network function (NF) of a home network (HN) for a user equipment (UE) configured to operate in a serving network (SN). Such methods include receiving, from an NF of the SN, a first home access stratum (HAS) message that includes a first message from the UE to a second NF of the HN. Such methods include performing at least one of decryption and integrity verification of the first HAS message based on a HAS security context associated with the UE, thereby obtaining the first message. The HAS security context is based on a security key (K_{AUSF}) associated with an authentication server function (AUSF) of the HN. Such methods include sending the first message to the second NF of HN. Other embodiments include complementary methods for UEs and NFs of the SN, as well as UEs and network equipment configured to perform such methods.

## Description

### TECHNICAL FIELD

The present application relates generally to the field of communication networks, and more specifically to techniques for secure communication between a user equipment (UE) and network functions in the UE's home network.

### INTRODUCTION

The fifth generation ("5G") of cellular systems has been standardized within the Third-Generation Partnership Project (3GPP). 5G is developed for maximum flexibility to support various use cases including enhanced mobile broadband (eMBB), machine type communications (MTC), ultra-reliable low latency communications (URLLC), side-link device-to-device (D2D), and several others. 5G was initially specified in 3GPP Release 15 (Rel-15) and continues to evolve through subsequent releases.

At a high level, the 5G System (5GS) consists of an Access Network (AN) and a Core Network (CN). The AN provides UEs connectivity to the CN, e.g., via base stations such as gNBs or ng-eNBs described below. The CN includes a variety of Network Functions (NF) that provide a wide range of different functionalities such as session management, connection management, charging, authentication, etc.

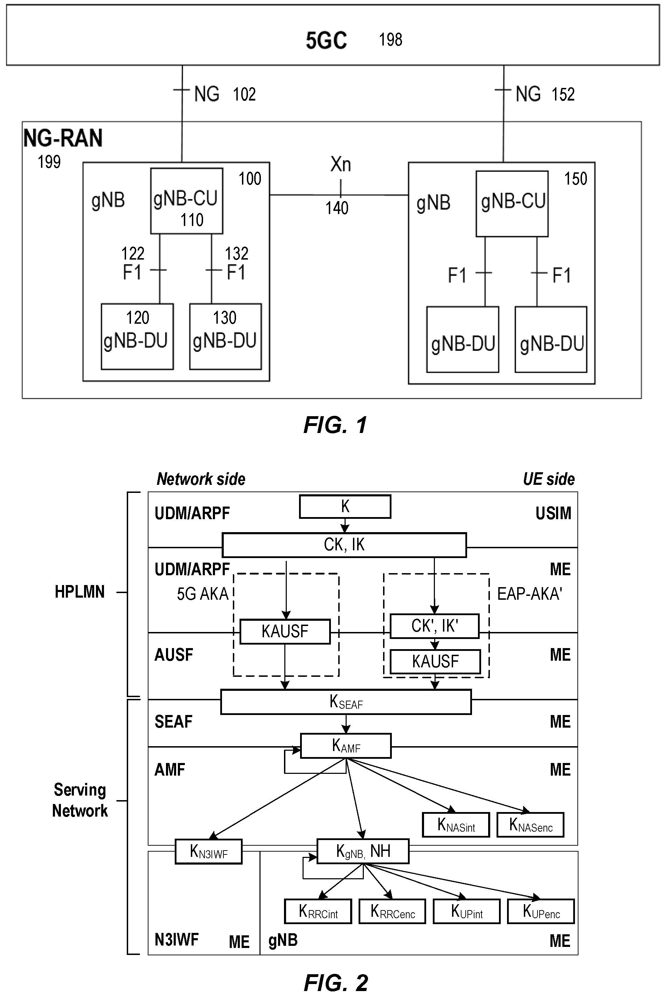

Figure 1 illustrates a high-level view of an exemplary 5G network architecture, consisting of a Next Generation Radio Access Network (NG-RAN, 199) and a 5G Core (5GC, 198). The NG-RAN can include one or more gNodeB's (gNBs) connected to the 5GC via one or more NG interfaces, such as gNBs (100, 150) connected via respective interfaces (102, 152). More specifically, the gNBs can be connected to one or more Access and Mobility Management Functions (AMFs) in the 5GC via respective NG-C interfaces and to one or more User Plane Functions (UPFs) in 5GC via respective NG-U interfaces. Various other network functions (NFs) can be included in the 5GC, as described in more detail below.

NG RAN logical nodes (e.g., gNB 100) include a Central Unit (CU or gNB-CU, e.g., 110) and one or more Distributed Units (DU or gNB-DU, e.g., 120, 130) connected via respective F1 logical interfaces (e.g., 122, 132). CUs are logical nodes that host higher-layer protocols and perform various gNB functions such controlling the operation of DUs. DUs are decentralized logical nodes that host lower layer protocols and can include, depending on the functional split option, various subsets of the gNB functions.

One change in 5G networks is that traditional peer-to-peer interfaces and protocols found in earlier-generation networks are modified and/or replaced by a Service Based Architecture (SBA) in which the NFs in the 5G CN (5GC) provide services to one or more service consumers. In particular, an NF that provides a service is referred to as "NF Service Producer" or "NF Producer (NFp)" while an NF that consumes a service (e.g., provided by an NFp) is referred to as "NF Service Consumer" or "NF Consumer (NFc)." An NFc requests the service from an NFp. Each unique NF instance - whether NFc or NFp - is uniquely identified by an NF Instance ID. Each NFc and NFp registers with a network repository function (NRF), which stores profiles of registered NFs and facilitates NF discovery of services offered by other NFs.

Communication links between the UE and a 5G network can be grouped in two strata. The UE communicates with the AMF in the CN over the Non-Access Stratum (NAS), via a NAS protocol with built-in security mechanisms. The UE communicates with the AN over the Access Stratum (AS), via packet data convergence protocol (PDCP) with built-in security mechanisms.

The security in 5G networks is based on a key hierarchy shown in Figure 2 and described in more detail in 3GPP TS 33.501 (v18.9.0). This key hierarchy includes the following keys: K_{AUSF}, K_{SEAF}, K_{AMF}, K_{NASint}, K_{NASenc}, KN3IWF, KgNB, K_{RRCint}, K_{RRCenc}, K_{UPint} and K_{UPenc}. The keys K and CK/IK are used for authentication of the UE (specifically the USIM in the UE) with an authentication server function (AUSF) in 5GC. The keys CK' and IK' are derived by the AUSF and the UE (specifically the mobile equipment, ME, part of the UE) from CK and IK. Furthermore, K_{AUSF} is derived CK' and IK' during primary authentication of the UE in the UE's home network (HN), while K_{SEAF} is an anchor key derived by ME and AUSF from K_{AUSF}. K_{SEAF} is provided by AUSF in the HN to the security anchor function (SEAF) in the UE's serving network, and is used by this SEAF and the ME to derive K_{AMF}.

NAS protocol communication between UE and AMF uses security keys derived by AMF and ME from K_{AMF}. In particular, K_{NASint} is used for the integrity protection of NAS signalling with a particular integrity algorithm while K_{NASenc} is used for encryption of NAS signalling with a particular encryption algorithm. In contrast, AS communication uses four different keys derived from K_{AMF}: one for integrity protection of signaling (K_{RRCint}), one for encryption of signaling (K_{RRCenc}), one for integrity protection of user data (K_{UPint}) and one for encryption of user data (KUPenc).

When a UE is roaming in a visited public land mobile network (VPLMN), the 5GC includes a communication channel between the UE and the UE's HN. This channel may be used for exchange of steering of roaming information and other UE parameters such as routing indicator, default configured network slice selection assistance information (NSSAI), etc. This channel runs via NAS between UE and AMF in the VPLMN, and is integrity protected from HN to UE using K_{AUSF} generated during primary authentication. Although there is no end-to-end encryption of this channel, NAS provides encryption between UE and AMF in the VPLMN.

### SUMMARY

Since there is no end-to-end encryption between HN and UE, the exchanged information is visible to the AMF in the VPLMN. This may be problematic when the AMF belongs to a VPLMN that is not fully trusted by the HN. Moreover, this condition may prevent the HN from exchanging sensitive, private, or confidential information with the UE via the AMF. Furthermore, since the AMF can read the exchanged information, it is possible that the untrusted AMF may block, filter, or modify certain information exchanged between UE and HN. More generally, when the UE is being served by a VPLMN, the HN has limited visibility into security status of the UE or security procedures between UE and VPLMN. All of these conditions increase the risk of exchanging information between UE and HN via AMF in the VPLMN. There may be corresponding problems or issues even when the UE is being served by its HN, i.e., in a non-roaming scenario.

An object of embodiments of the present disclosure is to provide and/or facilitate a home access stratum (HAS) for secure communication between a UE and the UE's HN, thereby addressing the problems summarized above and described in more detail below.

Some embodiments of the present disclosure include methods (e.g., procedures) for a first network function (NF) of a home network (HN) for a UE configured to operate in a serving network (SN).

These exemplary methods include receiving, from an NF of the SN, a first HAS message that includes a first message from the UE to a second NF of the HN. These exemplary methods also include performing at least one of decryption and integrity verification of the first HAS message based on a HAS security context associated with the UE, thereby obtaining the first message. The HAS security context is based on a security key (K_{AUSF}) associated with an AUSF of the HN. These exemplary methods also include sending the first message to the second NF of the HN.

In some embodiments, these exemplary methods also include deriving at least one of the following keys for the HAS security context:
- a first key for HAS encryption and decryption;
- a second key for HAS integrity protection and integrity verification; and
- a third key for HAS encryption, decryption, integrity protection, and integrity verification.

In some of these embodiments, the first NF of the HN is a home environment anchor function (HEAF), the first message is sent together with an identifier of the UE, and the first HAS message is received in a request that also includes the identifier of the UE. In some variants of these embodiments, the HAS security context includes a key (K_{HEAF}) derived from K_{AUSF} and one of the following derived from K_{HEAF}:
- the first and second keys, based on which the at least one of decryption and integrity verification are performed; or
- the third key, based on which the at least one of decryption and integrity verification are performed.

In other of these embodiments, the HAS security context is further based on a security key (K_{SEAF}) associated with a security anchor function (SEAF) of the SN, and one or more of the following applies:
- the decryption of the first message is based on a first key included in the HAS security context; and
- the integrity verification of the first message is based on a second key included in the HAS security context.

In some variants of these embodiments, the first NF of the HN is the AUSF. In such variants, the first key is derived based on K_{SEAF} and/or the second key is derived based on K_{AUSF}. In some further variants, the first key is derived from a first intermediate key, with the first intermediate key being derived from K_{SEAF}. In some further variants, the second key is derived from a second intermediate key, with the second intermediate key being derived from K_{AUSF}.

In other variants of these embodiments, the first NF of the HN is a HEAF different from the AUSF and these exemplary methods also include receiving the following from the AUSF of the HN:
- a primary security key (K_{HEAF}) for communication between the UE and the HEAF, or a key derived from K_{HEAF};
- K_{SEAF} or a key derived from K_{SEAF}; and
- an indication of the UE's security capabilities.
In these variants, one or more of the following applies: the first key is derived from K_{SEAF} or the key derived from K_{SEAF}, and the second key is derived from K_{HEAF} or the key derived from K_{HEAF}

Other embodiments include exemplary methods (e.g., procedures) for a UE configured with a HN and to operate in a SN. The exemplary methods are complementary to the exemplary methods for the first NF of the HN, summarized above.

These exemplary methods include, based on a HAS security context associated with the UE, performing at least one of encryption and integrity protection of a first message from the UE to a second NF of the HN, thereby obtaining a first HAS message. These exemplary methods also include sending the first HAS message to an NF of the SN. The HAS security context is based on a security key (K_{AUSF},) associated with an AUSF of the HN.

In some embodiments, the first HAS message is sent in a first NAS message to the NF of the SN and these exemplary methods also include performing at least one of encryption and integrity protection of the first HAS message based on a NAS security context associated with the UE, thereby obtaining the first NAS message.

In some embodiments, these exemplary methods also include deriving at least one of the following keys for the HAS security context:
- a first key for HAS encryption and decryption;
- a second key for HAS integrity protection and integrity verification; and
- a third key for HAS encryption, decryption, integrity protection, and integrity verification.

In some of these embodiments, the HAS security context includes a key (K_{HEAF}) derived from K_{AUSF} and one of the following derived from K_{HEAF}:
- the first and second keys, based on which the at least one of encryption and integrity protection are performed; or
- the third key, based on which the at least one of encryption and integrity protection are performed.

In other of these embodiments, the HAS security context is further based on a security key (K_{SEAF}) associated with a security anchor function (SEAF) of the SN, and these exemplary methods also include performing a primary authentication with the AUSF of the HN, thereby obtaining K_{AUSF} and K_{SEAF}.

In some variants of these embodiments, the encryption of the first message is based on the first key, which is derived based on K_{SEAF}. In some further variants, the first key is derived from a first intermediate key, with the first intermediate key being derived from K_{SEAF}. In some variants of these embodiments, the integrity protection of the first message is based on the second key, which is derived based on K_{AUSF}. In some further variants, the second key is derived from a second intermediate key, with the second intermediate key being derived from K_{AUSF}.

Other embodiments include exemplary methods (e.g., procedures) for an NF of an SN for a UE configured with a HN. The exemplary methods are complementary to the exemplary methods for the first NF of the HN and the UE, summarized above.

These exemplary methods include receiving, from the UE, a first HAS message that includes a first message from the UE to a second NF of the HN. These exemplary methods also include sending the first HAS message to a first NF of the HN.

In some embodiments, the UE and the first NF of the HN are associated with a HAS security context is associated with / includes at least one of the following keys:
- a first key for HAS encryption and decryption;
- a second key for HAS integrity protection and integrity verification; and
- a third key for HAS encryption, decryption, integrity protection, and integrity verification.

In some of these embodiments, the first NF of the HN is a HEAF and the first HAS message is sent in a request that also includes an identifier of the UE. In some variants of these embodiments, the HAS security context includes the following:
- a key (K_{HEAF}) derived from a security key (K_{AUSF}) associated with an AUSF of the HN;
   and
- one of the following derived from K_{HEAF}: the first key and the second key, or the third key.
In some further variants, the first HAS message is encrypted based on the first key or the third key. In some further variants, the first HAS message is integrity protected based on the second key or the third key.

In other of these embodiments, the first key is derived based on a security key (K_{SEAF}) associated with a SEAF of the SN and/or the second key is derived based on a security key (K_{AUSF}) associated with an AUSF of the HN. In some variants of these embodiments, one or more of the following applies:
- the first key is derived from a first intermediate key, with the first intermediate key being derived from K_{SEAF}; and
- the second key is derived from a second intermediate key, with the second intermediate key being derived from K_{AUSF}.

The following summary of features applies to all of the embodiments summarized above. In some embodiments, the NF of the SN is an AMF or an SMF. In some embodiments, the second NF of the SN is an SEAF or an AMF. In some embodiments, the first NF of the HN is one of the following: the AUSF, a HEAF included in the AUSF, or a HEAF not included in the AUSF.

In some embodiments, the SN is different from the HN (e.g., in the roaming case). In other embodiments, the SN is the HN (e.g., in the non-roaming case). In some embodiments, the first message to the UE from the second NF of the HN is accessible by the SN for lawful intercept (LI).

Other embodiments, variants, and features of the exemplary methods summarized above are described herein. Other embodiments include network equipment (e.g., network nodes, virtualization environments, etc.) and UEs configured to implement the exemplary methods summarized above and described herein. Other embodiments also include non-transitory, computer-readable media storing computer-executable instructions that, when executed by processing circuitry of network equipment and UEs, configure the same to perform operations corresponding to the exemplary methods summarized above and described herein.

These and other embodiments described herein may provide various benefits and/or advantages. For example, compared to conventional (e.g., 5G) communication between a UE and the UE's HN, embodiments facilitate bi-directional HN-UE communication with improved end-to-end security. Furthermore, embodiments may remove the need for the UE's HN to trust the UE's VPLMN or any NFs therein (e.g., AMF). Moreover, embodiments may facilitate LI of UE communications in a VPLMN, in accordance with relevant regulations in the VPLMN's jurisdiction.

These and other objects, features, and advantages of the present disclosure will become apparent upon reading the following Detailed Description in view of the Drawings briefly described below.

### BRIEF DESCRIPTION OF THE DRAWINGS

Figure 1 shows an example 5G network architecture.
Figure 2 shows an example key hierarchy for security in 5G networks.
Figure 3 shows an example non-roaming reference architecture for a 5G network.
Figure 4 shows a signaling diagram for an example procedure for steering of roaming during UE registration in a VPLMN.
Figures 5-6 show exemplary arrangements for direct UE NAS communication with various NFs in a core network.
Figure 7 shows an example implementation of HAS based on centralized HEAF, according to some embodiments of the present disclosure.
Figure 8 shows an example implementation of HAS based on distributed HEAF, according to other embodiments of the present disclosure.
Figure 9 shows a signaling diagram of a procedure for HAS security context establishment, according to some embodiments of the present disclosure.
Figure 10 shows a signaling diagram of a procedure for HN-initiated HAS communication, according to some embodiments of the present disclosure.
Figure 11 shows a signaling diagram of a procedure for UE-initiated HAS communication, according to some embodiments of the present disclosure.
Figure 12 shows a signaling diagram of another procedure for HN-initiated communication, according to other embodiments of the present disclosure.
Figure 13 shows an example key hierarchy for HAS communications, according to some embodiments of the present disclosure.
Figure 14 shows a signaling diagram of a procedure for steering of roaming during UE registration in a VPLMN, according to some embodiments of the present disclosure.
Figure 15 shows an exemplary method (e.g., procedure) for a first NF of a HN for a UE, according to various embodiments of the present disclosure.
Figure 16 shows an exemplary method (e.g., procedure) for a UE, according to various embodiments of the present disclosure.
Figure 17 shows an exemplary method (e.g., procedure) for an NF of a SN for a UE, according to various embodiments of the present disclosure.
Figures 18-19 show two example communication systems according to some embodiments of the present disclosure.
Figure 20 shows an example wireless device according to some embodiments of the present disclosure.
Figure 21 shows an example network node according to some embodiments of the present disclosure.
Figure 22 shows an example virtualization environment in which some embodiments of the present disclosure may be virtualized

### DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

In general, all terms used herein are to be interpreted according to their ordinary meaning to a person of ordinary skill in the relevant technical field, unless a different meaning is expressly defined and/or implied from the context of use. All references to a/an/the element, apparatus, component, means, step, etc. are to be interpreted openly as referring to at least one instance of the element, apparatus, component, means, step, etc., unless explicitly stated otherwise or clearly implied from the context of use. The operations of any methods and/or procedures disclosed herein do not have to be performed in the exact order disclosed, unless an operation is explicitly described as following or preceding another operation and/or it is implicit that an operation must follow or precede another operation. Any feature of any embodiment disclosed herein can apply to any other disclosed embodiment, as appropriate. Likewise, any advantage of any embodiment described herein can apply to any other disclosed embodiment, as appropriate.

Note that the description given herein focuses on a 3GPP cellular communications system and, as such, 3GPP terminology or terminology similar to 3GPP terminology is generally used. However, the concepts disclosed herein are not limited to a 3GPP system, and can be applied in any system that can benefit from the concepts, principles, and/or embodiments described herein.

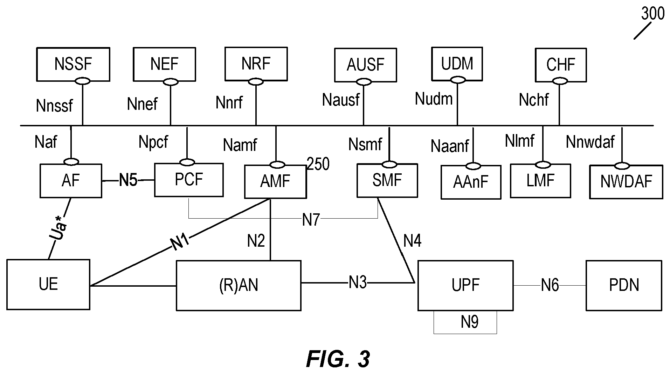

Figure 3 shows an exemplary non-roaming reference architecture for a 5G network (300). This architecture includes a UE, an access network (AN, e.g., NG-RAN), an external packet data network (PDN), and various NFs that comprise the 5GC. The following describes the NFs that are most relevant to the present disclosure:
- Policy Control Function (PCF, with Npcf interface) - supports unified policy framework to govern the network behavior, via providing PCC rules (e.g., on the treatment of each service data flow that is under PCC control) to the SMF via the N7 reference point. PCF provides policy control decisions and flow based charging control, including service data flow detection, gating, QoS, and flow-based charging (except credit management) towards the SMF. The PCF receives session and media related information from the AF and informs the AF of traffic (or user) plane events.

- User Plane Function (UPF) - supports handling of user plane traffic based on the rules received from SMF, including packet inspection and different enforcement actions (e.g., event detection and reporting). UPFs communicate with the RAN via the N3 reference point, with SMFs (discussed below) via the N4 reference point, and with the PDN via the N6 reference point. UPFs communicate with each other via N9 reference point.
   - Session Management Function (SMF, with Nsmf interface) - interacts with the decoupled traffic (or user) plane, including creating, updating, and removing Protocol Data Unit (PDU) sessions and managing session context with the User Plane Function (UPF), e.g., for event reporting. For example, SMF performs data flow detection (based on filter definitions included in PCC rules), online and offline charging interactions, and policy enforcement.
- Access and Mobility Management Function (AMF, with Namf interface) - terminates the RAN CP interface and handles all mobility and connection management of UEs. AMFs communicate with UEs via the N1 reference point and with the RAN via the N2 reference point.
   - Network Exposure Function (NEF, with Nnef interface) - acts as the entry point into operator's network, by securely exposing to AFs the network capabilities and events provided by 3GPP NFs and by providing ways for the AF to securely provide information to 3GPP network. For example, NEF provides a service that allows an AF to provision specific subscription data (e.g., expected UE behavior) for various UEs.
   - Network Repository Function (NRF, with Nnrf interface) - provides service registration and discovery, enabling NFs to identify appropriate services available from other NFs.
   - Network Slice Selection Function (NSSF, with Nnssf interface) - a "network slice" is a logical partition of a 5G network that provides specific network capabilities and characteristics, e.g., in support of a particular service. A network slice instance is a set of NF instances and the required network resources (e.g., compute, storage, communication) that provide the capabilities and characteristics of the network slice. The NSSF enables other NFs (e.g., AMF) to identify a network slice instance that is appropriate for a UE's desired service.
   - Authentication Server Function (AUSF, with Nausf interface) - based in a user's home network (HPLMN), it performs user authentication and computes security key materials for various purposes.
   - Unified Data Management function (UDM, with Nudm interface) - supports generation of 3GPP authentication credentials, user identification handling, access authorization based on subscription data, and other subscriber-related functions. To provide this functionality, the UDM uses subscription data (including authentication data) stored in the 5GC unified data repository (UDR). In addition, UDR supports storage and retrieval of policy data by the PCF, as well as storage and retrieval of application data by NEF.

As discussed above, communication links between the UE and a 5G network can be grouped in two strata. The UE communicates with the AMF over the Non-Access Stratum (NAS), via a NAS protocol with built-in security mechanisms. The UE communicates with the AN over the Access Stratum (AS), via packet data convergence protocol (PDCP) with built-in security mechanisms. In particular, AS and NAS communication is secured based on a key hierarchy summarized above in relation to Figure 1 and described in more detail in 3GPP TS 33.501 (v18.9.0).

As also discussed above, the 5GC includes a communication channel between a UE and the UE's home network (HN), when the UE is roaming in a visited public land mobile network (VPLMN). The HN may also be referred to as home public land mobile network (HPLMN). This channel may be used for exchange of steering of roaming information and other UE parameters such as routing indicator, default configured network slice selection assistance information (NSSAI), etc. This communication channel runs via the NAS between UE and AMF in the VPLMN, and is integrity protected from HN to UE using K_{AUSF} generated during primary authentication. Although there is no end-to-end encryption of this channel, the NAS protocol provides encryption between the UE and AMF in VPLMN.

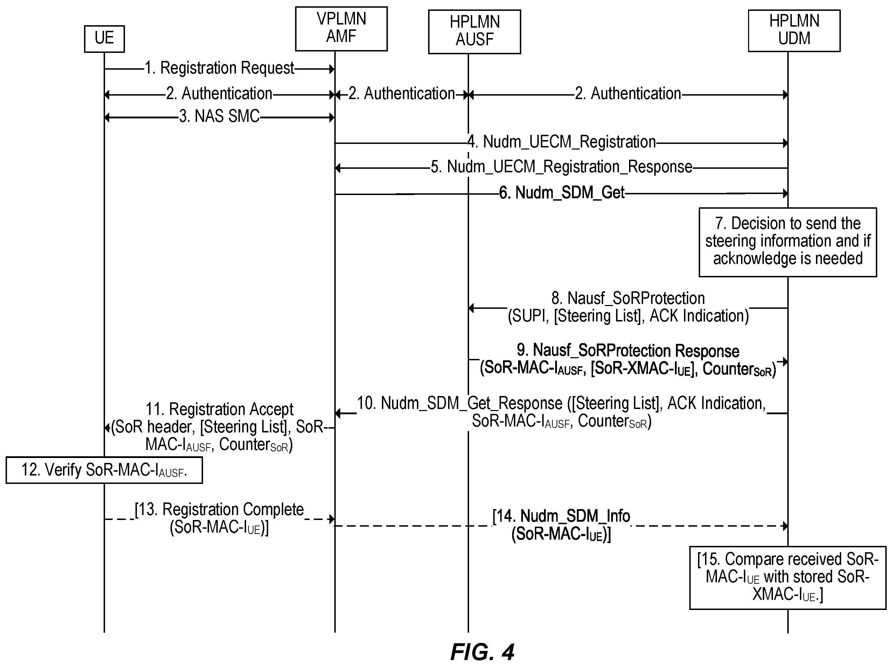

Figure 4 shows a signaling diagram for an example procedure for steering of roaming during UE registration in a VPLMN, as further specified in 3GPP TS 33.501 (v18.9.0).

In operation 1, the UE initiates registration by sending Registration Request message to the VPLMN AMF. In operations 2-3, the VPLMN AMF executes the registration procedure as defined in sub-clause 4.2.2.2.2 of 3GPP TS 23.502. As part of the registration procedure, the VPLMN AMF executes primary authentication of the UE and then initiates the NAS security mode command (SMC) procedure, after the authentication is successful.

In operations 4-5, the VPLMN AMF invokes the Nudm_UECM_Registration message to the UDM and registers access with the UDM as per operation 14a in sub-clause 4.2.2.2.2 of 3GPP TS 23.502. In operation 6, the VPLMN AMF invokes Nudm_SDM_Get service operation message to the UDM to obtain the Access and Mobility Subscription data for the UE, among other information.

In operation 7, the UDM decides to send the Steering of Roaming Information, and obtains a list of preferred PLMN/access technology combinations and optional additional SoR information (e.g., SOR-CMCI and the "Store the SOR-CMCI in the ME" indicator), or a secured packet list as described in 3GPP TS 23.122. Additional SoR information (e.g., SOR-CMCI and the "Store the SOR-CMCI in the ME" indicator) can only be added when the AMF supports SoR transparent container.

If the UDM determines that the UE is configured to not expect to receive Steering of Roaming Information at initial registration and if the UDM determines that no change of the "Operator Controlled PLMN Selector with Access Technology" list stored in the UE is needed, then the UDM may not piggyback Steering of Roaming Information at all in the Nudm_SDM _Get response and hence the following steps are omitted.

In operations 8-9, the UDM invokes the Nausf_SoRProtection service operation message to the AUSF to get SoR-MAC-I_{AUSF} and Counter_{SoR} as specified in sub-clause 14.1.3 of 3GPP TS 33.501. The UDM selects the AUSF that holds the latest K_{AUSF} of the UE. If the HPLMN decides that the UE is to acknowledge the successful security check of the received Steering of Roaming Information, then the UDM shall set accordingly the ACK Indication included in the Nausf_SoRProtection service operation message to signal that it also needs the expected SoR-XMAC-I_{UE}, as specified in sub-clause 14.1.3 of 3GPP TS 33.501.

At reception of Nausf_SoRProtection_Protect request from the UDM, if the SoR header is not included in the request, the AUSF constructs the SOR header, as described in clause 9.11.3.51 of 3GPP TS 24.501, based on the information received from the UDM, i.e., ACK Indication and list of preferred PLMN/access technology combinations or secured packet (if provided); otherwise, if the SoR header is contained in the request, the AUSF uses the received SoR header in the calculation of SoR-MAC-I_{AUSF.}.

The details of the Counter_{SoR} are specified in sub-clause 6.14.2.3 of 3GPP TS 33.501. The inclusion of the Steering List and the SoR header in the calculation of SoR-MAC-I_{AUSF} allows the UE to verify that the received Steering of Roaming Information is not tampered with or removed by the VPLMN. The expected SoR-XMAC-I_{UE} allows the UDM to verify that the UE received the Steering of Roaming Information.

In operation 10, the UDM responds to the Nudm_SDM_Get service operation to the VPLMN AMF, which shall include the SoR transparent container as specified in clause 6.1.6.3.2 of 3GPP TS 29.503 if the VPLMN AMF support SoR transparent container, or includes individual IEs comprising the ACK Indication, the list of preferred PLMN/access technology combinations or secured packet (if provided), SoR-MAC-I_{AUSF} and Counter_{SoR} within the Access and Mobility Subscription data. If the UDM requests an acknowledgement, it shall temporarily store the expected SoR-XMAC-I_{UE}.

In operation 11, if the SoR transparent container is received from the UDM, the VPLMN AMF shall include the received SoR transparent container in the Registration Accept message and send it to the UE. If the individual IEs are received from the UDM, the VPLMN AMF shall construct the SOR header based on the ACK Indication and the list of preferred PLMN/access technology combinations or secured packet (if provided) received from the UDM and include it in the SOR transparent container as specified in clause 9.11.3.51 of 3GPP TS 24.501. The VPLMN shall also include SoR-MAC-I_{AUSF}and Counter_{SoR}(both also received from the UDM) in the constructed SoR transparent container, and convey the constructed SoR transparent container to the UE in the Registration Accept message.

In operation 12, upon receiving the Registration Accept message with the SoR transparent container from the AMF the UE calculates the SoR-MAC-I_{AUSF} in the same way as the AUSF (as specified in Annex A.17 of 3GPP TS 33.501) on the SoR transparent container, including the Counter_{SoR} and the SoR header, and verifies whether it matches the SoR-MAC-I_{AUSF} value received in the Registration Accept message. Based on the SoR-MAC-I_{AUSF} verification outcome, the behaviour of the UE is specified in 3GPP TS 23.122.

In operation 13, if the UDM has requested an acknowledgement from the UE and the UE verified that the SoR transparent container received in operation 12 has been provided by the HPLMN, then the UE shall send the Registration Complete message to the serving AMF. The UE shall generate the SoR-MAC-I_{UE} as specified in Annex A.18 of 3GPP TS 33.501 and includes the generated SoR-MAC-I_{UE} in a SOR transparent container in the Registration Complete message.

In operation 14, the AMF sends a Nudm_SDM_Info request message to the UDM. If a transparent container with the SoR-MAC-I_{UE} was received in the Registration Complete message, then if the AMF supports SoR transparent container, the AMF shall include the received SoR transparent container in SoR transparent container in the Nudm_SDM_Info request message, otherwise, the AMF shall include the SoR-MAC-I_{UE} in the received SoR transparent container in the Nudm_SDM_Info request message.

In operation 15, if the HPLMN indicated that the UE is to acknowledge the successful security check of the received Steering of Roaming Information in operation 10, then the UDM shall compare the received SoR-MAC-I_{UE} with the expected SoR-XMAC-I_{UE} that the UDM stored temporarily in operation 10.

During discussions of sixth-generation (6G) network standards, there has been some interest in reducing or eliminating the role of AMF as a proxy for all communications between UE and CN. For example, there is some interest in facilitating NAS communication directly between UE and other NFs within the 5GC, without AMF involvement.

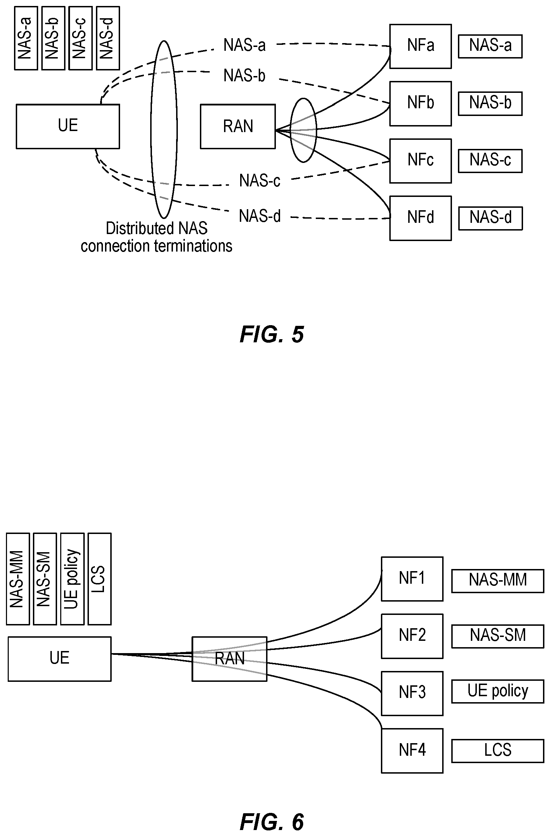

Figure 5 shows an exemplary arrangement in which the AMF is omitted and a UE performs NAS communication (NAS-a, NAS-b, NAS-c, NAS-x) directly with various NFs (NFa, NFb, NFc, NFx) in the core network. In Figure 5, the UE's communication with the various NFs is referred to as distributed NAS connection terminations. The RAN also communicates directly with the various NFs in the core network.

Figure 6 shows another exemplary arrangement in which the AMF remains but the UE performs NAS communication directly with various NFs in the core network, in addition to communicating with the AMF. In this arrangement, each NAS connection between UE and NF has its own security context (e.g., keys and cryptographic algorithms) that is at least some degree independent of the security contexts of the other NAS connections.

During discussions of 6G network standards, there has also been some interest in an independent security anchor function (SEAF) for NAS security. This solution is intended to address various 5G NAS security risks and issues, including the lack of end-to-end encryption in the communication channel between a UE and the UE's HN, mentioned above.

Since there is no end-to-end encryption between HN and UE, the exchanged information is visible to the AMF in the VPLMN. This may be problematic when the AMF belongs to a VPLMN that is not fully trusted by the HN. Moreover, this condition may prevent the HN from exchanging sensitive, private, or confidential information with the UE via the AMF. Furthermore, since the AMF can read the exchanged information, it is possible that the untrusted AMF may block, filter, or modify certain information exchanged between UE and HN. More generally, when the UE is being served by a VPLMN, the HN has limited visibility into security status of the UE or security procedures between UE and VPLMN.

The proposed independent 6G SEAF is intended to support forward security in AMF (or other NF) relocation as well as isolation of UE security contexts between different NFs or services, such as discussed above. This facilitates different security contexts for different NFs and end-to-end secure interactions between UEs and individual NFs, without possibility of interference from other NFs. This solution is also intended to provide separate security anchors in the UE's HN and VPLMN, which may facilitate secure NAS communication when roaming. Other benefits or advantages are also possible.

Even so, there remain various problems, issues, and/or difficulties. In general, when the UE is being served by a VPLMN, the HN has limited visibility into security status of the UE or security procedures between UE and VPLMN. This situation conflicts with the Zero Trust paradigm, where a resource owner (HN) should continuously monitor and evaluate the security state of its resources (UEs). To comply with the Zero Trust paradigm, it is important that a roaming UE has a secure channel to HN to send indications of security related events (e.g., registration, de-registration, SMC, etc.) in VPLMNs, so that the HN may assess the UE's security state.

Furthermore, the activation of key K_{AUSF} - from which other keys are derived - has been very loosely specified and lacks a Security Mode Command (SMC) procedure similar to the one defined for activation of AS/NAS keys and negotiation of security algorithms used. Additionally, the existing communication channel between HN and UE carries information from HN to UE but not in the opposite direction from UE to HN. Examples of information to be sent from UE to HN include UE capabilities, update of the LCS privacy profile, periodic security-related event, and home-routed traffic (with SMF). This information exchange requires that the UE and the HN trust the AMF in the VPLMN, which may be detrimental.

Embodiments of the present disclosure address these and other problems, issues, and/or difficulties by providing flexible and efficient techniques for establishing and utilizing a secure connection between UE and a HN while the UE is roaming into a VPLMN or even while the UE is being served by the SN. This connection will be referred to herein as home access stratum (HAS), and may be protected by a security context available to both UE and HN.

For example, this connection between UE and HN may be handled by a novel NF in the HN, which will be referred to as home environment anchor function (HEAF) in the following description. In various embodiments, the HEAF may be centralized (e.g., single NF in HN) or distributed (e.g., among NFs in the HN). Alternately, this connection between UE and HN may be handled by a AUSF.

In these embodiments, HAS messages are sent from HEAF to UE via the UE's registered AMF in the VPLMN, and NAS is used to transport HAS messages between AMF and UE. It is also possible that HAS messages may be sent without traversing via the UE's registered AMF. HAS communication may be based on HN security credentials configured in the UE's USIM (i.e., in SIM card or eUICC). The HAS security context mentioned above facilitates encryption and integrity protection for messages exchanged between UE and HN, and may be established anytime upon request of UE or HN.

In general, secure HAS messages are only needed or used when a UE is roaming in a VPLMN. Even so, messages between the UE and NFs residing in the UE's HN may still be relevant during non-roaming so HEAF may be used also in the non-roaming case, although null security (i.e., no encryption or integrity protection) may be used for HAS messages between HEAF and the UE. As such, the term "serving network" (or SN, for short) may be used to refer to the network (e.g., PLMN) currently serving the UE, which may be a VPLMN (in the roaming case) or the HPLMN/HN (in the non-roaming case).

In some embodiments, the HAS security context may include a key used as a basis for encryption and integrity protection, which may be referred to as K_{HEAF}, K_{HAS} , or a similar name. This key may be derived from K_{AUSF} (or similar key) by UE and HN, and may be used by these two entities to derive further keys used for HAS encryption and integrity protection, e.g., K_{HAS-enc} and K_{HAS-int}. Alternately, these keys used for HAS encryption and integrity protection may be derived directly from K_{AUSF} (or similar key) by UE and HN, e.g., K_{HAS-int} = KDF (K_{AUSF}, "HAS-int", ...).

In some cases, the key used for HAS encryption (e.g., K_{HAS-enc} ) may also be known to the SN. This may be needed to support lawful interception (LI) of the UE's communications while in the SN. For example, the key used for HAS encryption may be derived from K_{SEAF}, e.g., K_{HAS-enc} = KDF (K_{SEAF}, "HAS-enc", ...). In other variants, encryption may be disabled in roaming scenarios to facilitate LI.

In various embodiments, HAS may be established via a HAS security mode command (SMC). In some embodiments, this is done after successful execution of each primary authentication for the UE. In these embodiments, HAS establishment is HN-initiated and once established, HAS is always on but refreshed after each primary authentication. In other embodiments, HAS may be established on-demand/as needed. In these embodiments, HAS establishment may be UE- or HN-initiated but is terminated once the demand that triggered the establishment no longer exists.

In various embodiments, the HAS SMC may consider both UE and HN capabilities for negotiation of HAS security algorithms, etc. Thus, UE and HN need to exchange HAS capabilities. Moreover, HAS SMC may be used by HN in a similar way as SoR to provision the UE with parameters (e.g., list of AF-specific UE GPSIs). For example, SoR can be used for the HN to provide parameters to the UE in between HAS SMC invocations.

The UE and HN need to agree on HAS security algorithms (e.g., for encryption and integrity protection) and other parameters, before activating HAS security. This may be done using a HAS security mode command (SMC) procedure during which the UE sends its HAS security capabilities (e.g., supported security algorithms) to the HN (e.g., during authentication). The HN chooses the encryption and integrity protection algorithms from the UE's HAS security capabilities and indicates these selections to the UE (together with the UE security capabilities) in an integrity protected HAS SMC message. The UE uses the HN-selected security algorithms to encrypt and integrity protect a HAS SMC complete message, which it sends back to the HN. Subsequently, all HAS messages between UE and HN are encrypted and integrity protected.

In various embodiments, the HAS SMC procedure may be a standalone procedure or may be integrated with UE authentication procedures, such as initial authentication or re-authentication. For example, the HAS SMC procedure may be performed after successful execution of each primary authentication for the UE. In such case, HAS establishment is HN-initiated and once established, HAS is always on but refreshed after each primary authentication.

As another example, HAS may be established on-demand/as needed. In these embodiments, HAS establishment may be UE- or HN-initiated but is terminated once the demand that triggered the establishment no longer exists. As another example, during subsequent re-authentications of the UE that are requested by the SN, the new K_{SEAF} could be based on full authentication or on the current K_{AUSF} if no full authentication is run. In the latter case, K_{SEAF} derivation would need to include a freshness parameter.

Based on these techniques, UE and HN are able to exchange information securely (e.g., via HEAF) in various UE roaming arrangements including local breakout (LBO), home routing (HR), international, national, and mobile virtual network operator (MSNO) roaming. Compared to conventional 5G techniques, the communication channel between UE and HN is enhanced by improved security, bi-directionality, and avoidance of relying on VPLMN trustworthiness that may be unverifiable.

In general, secure HAS messages are only needed or used when a UE is roaming in a VPLMN. Even so, messages between NFs residing in the UE's HN may still be relevant during non-roaming so HEAF may be used also in the non-roaming case, although null security (i.e., no encryption or integrity protection) may be used for HAS messages between HEAF and the UE.

Although embodiments are mainly described in terms of CP communication between UE and NFs in the HN, some embodiments may also be used for UP communication between UE and AFs in the HN. In this case, to facilitate LI when roaming, the session keys (K_{AF}) or the K_{HEAF}+K_{AF} derivation parameters may be sent to the VPLMN AMF in clear text (possibly with integrity protection) as well as protected in the HAS message from HN to the UE.

Embodiments may provide various benefits and/or advantages. For example, compared to conventional (e.g., 5G) communication between a UE (e.g., roaming in a VPLMN) and the UE's HN, embodiments facilitate bi-directional HN-UE communication with improved end-to-end security. Furthermore, embodiments remove the need for the UE's HN to trust the VPLMN or any NFs therein (e.g., AMF). Moreover, embodiments facilitate LI of UE communications in a VPLMN, in accordance with relevant regulations in the VPLMN's jurisdiction.

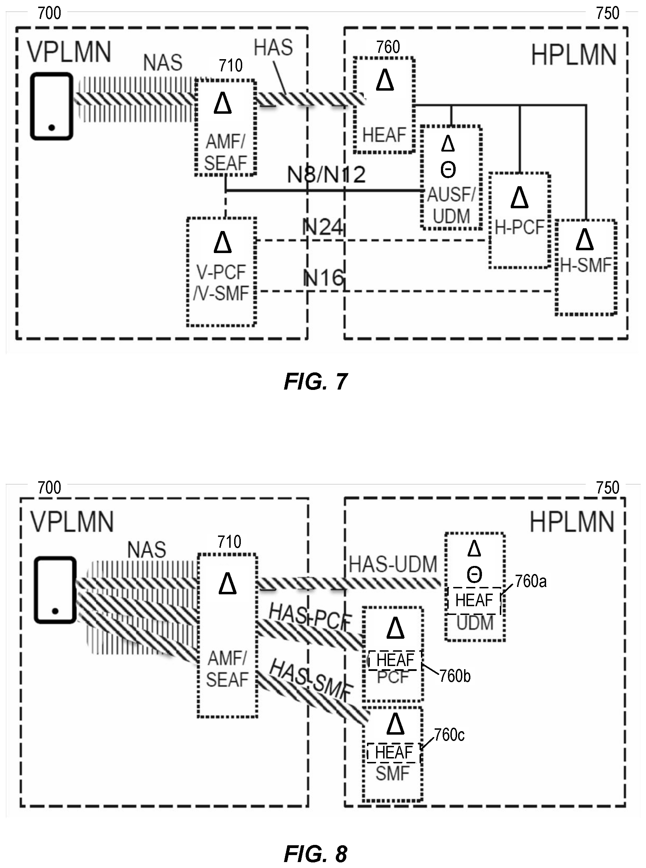

Figure 7 shows an example implementation of HAS based on centralized HEAF, according to some embodiments of the present disclosure. In this implementation, the role of HEAF is executed by a new NF (760) in the CN of the HPLMN (750). In this figure, the solid lines between HEAF and AUSF/UDM, H-PCF, and H-SMF in the HPLMN indicate interactions between these NFs. In this implementation, the HEAF is the single endpoint for communication with the UE (or AMF) in the VPLMN (700), and routes UE messages from AMF (710) in the VPLMN to different NFs in the HPLMN.

Figure 8 shows an example implementation of HAS based on distributed HEAF, according to other embodiments of the present disclosure. In this implementation, there may be multiple HEAFs within the HPLMN (750), each of which is used for different procedures with UEs. For example, each HEAF may be associated with a different NF that communicates with UEs, such as HEAF-UDM (760a), HEAF-PCF (760b), HEAF-SMF (760c), etc. In this case, the AMF (710) in the VPLMN (700) can send messages directly to the HPLMN NFs (e.g. UDM, PCF, SMF), which will be handled by the distributed HEAFs associated with those NFs.

In the distributed architecture, keys to be used for HAS security may be distributed from AUSF to the various distributed HEAFs in various ways. For example, AUSF may push K_{HEAF} (or keys derived therefrom) to the distributed HEAFs. As another example, each distributed HEAF may fetch K_{HEAF} (or keys derived therefrom) from the AUSF.

In other embodiments, an AUSF in the UE's HN may be the termination point for the HAS connection between UE and HN. Although this arrangement does not include an explicit HEAF, HEAF-type functionality may be part of the AUSF. The following description is based on this arrangement.

In general, HAS may be based on the same or similar principle as 5G NAS. For example, a HAS security context may be established for a UE, and may include keys for encryption and integrity protection of HAS messages, as well as HAS COUNTs to protect against replay attacks. In some embodiments, a HAS channel may be established on demand, such as when either the UE or the HN has a message to send to the other.

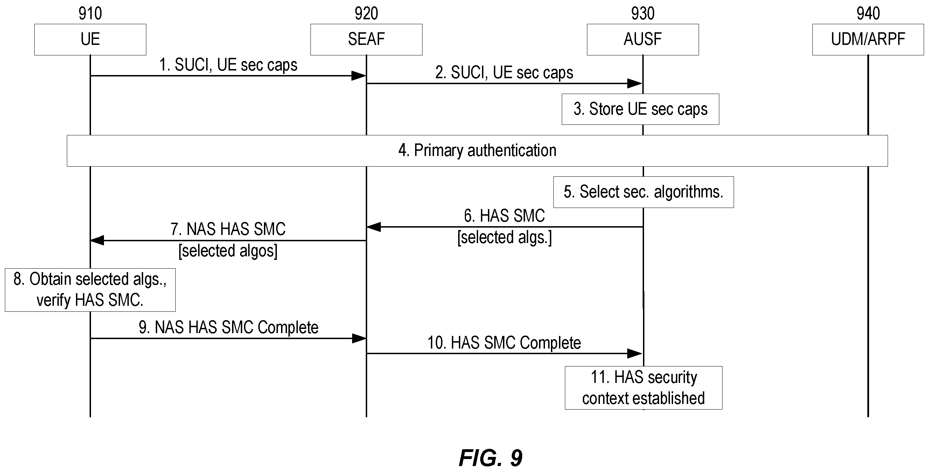

Figure 9 shows a signaling diagram of a procedure for HAS security context establishment, according to some embodiments of the present disclosure. The procedure is between a UE (910), an SEAF (920) in the UE's SN, an AUSF (930) in the UE's HN, and a UDM (940) in the UE's HN. In this procedure, the AUSF has the role of HEAF in the UE's HN. However, other NFs in the HN may also take on the role of HEAF, as discussed in more detail above. As mentioned above, the SN may be a VPLMN (roaming case) or the UE's HN (non-roaming case). Although the operations shown in Figure 9 are given numerical labels, this is done to facilitate the following explanation rather than to require or imply any particular operational order, unless expressly stated otherwise.

In operation 1, the UE sends its subscription concealed identifier (SUCI) and security capabilities to SEAF via NAS signaling. In operation 2, the SEAF initiates primary authentication of the UE and sends the UE's SUCI and security capabilities to the AUSF in the UE's HN. In operation 3, the AUSF stores the UE's security capabilities.

In operation 4, primary authentication is performed between UE, AUSF, and the UDM in the UE's HN. During primary authentication, both the UE and the AUSF obtain K_{AUSF} and K_{SEAF}, the latter of which is associated with the SEAF in the SN. As described in more detail below, AUSF is able to use K_{AUSF} and K_{SEAF} later in its role as HEAF for the UE.

In other embodiments, another NF in the HN may instead act as an HEAF for the UE. In these embodiments, this NF does not perform primary authentication with the UE, so it does not have direct access to K_{AUSF} and K_{SEAF} during primary authentication. Instead, the AUSF must derive another security key (e.g., K_{HEAF}) from K_{AUSF} and provide this derived key to the other NF to use in its role as HEAF, e.g., for derivation of HAS integrity protection/verification keys.

In some of these embodiments, the AUSF may also provide K_{SEAF} to the other NF to use in its role as HEAF, e.g., for derivation of HAS encryption/decryption keys. In other of these embodiments, the AUSF may derive another key from K_{SEAF} and provide this other key to the other NF to use in its role as HEAF.

In operation 5, the AUSF prepares a HAS SMC message and integrity protects it with a key derived from K_{AUSF}, e.g., K_{HAS-int}. AUSF also selects HAS integrity and encryption algorithms based on the UE's security capabilities and on the AUSF's own security capabilities, and includes the selected algorithms (or indications thereof) in the HAS SMC message. In operation 6, the AUSF sends the HAS SMC message to the SEAF in the UE's SN.

In operation 7, the SEAF sends the UE a NAS message that includes (or encapsulates) the HAS SMC message received from the AUSF. In operation 8, the UE obtains the selected HAS integrity and encryption algorithms from the HAS SMC message and verifies integrity of the message with a key derived from K_{AUSF}, e.g., K_{HAS-int}. In operation 9, the UE prepares a HAS SMC complete message, integrity protects it with a key derived from K_{AUSF} (e.g., K_{HAS-int}) encrypts it with a key derived from K_{SEAF} (e.g., K_{HAS-enc}), and sends the encrypted and integrity protected HAS SMC complete to SEAF in a NAS message.

In operation 10, the SEAF extracts the HAS SMC complete message from the NAS message and sends the HAS SMC complete message to the AUSF in the UE's HN. In operation 11, the AUSF verifies the integrity of the received HAS SMC complete with a key derived from K_{AUSF} (e.g., K_{HAS-int}) and decrypts the received HAS SMC complete with a key derived from K_{SEAF} (e.g., K_{HAS-enc}). If the integrity protection verification is successful, the HAS establishes the SMC security context in operation 11 (which may also be considered part of operation 10).

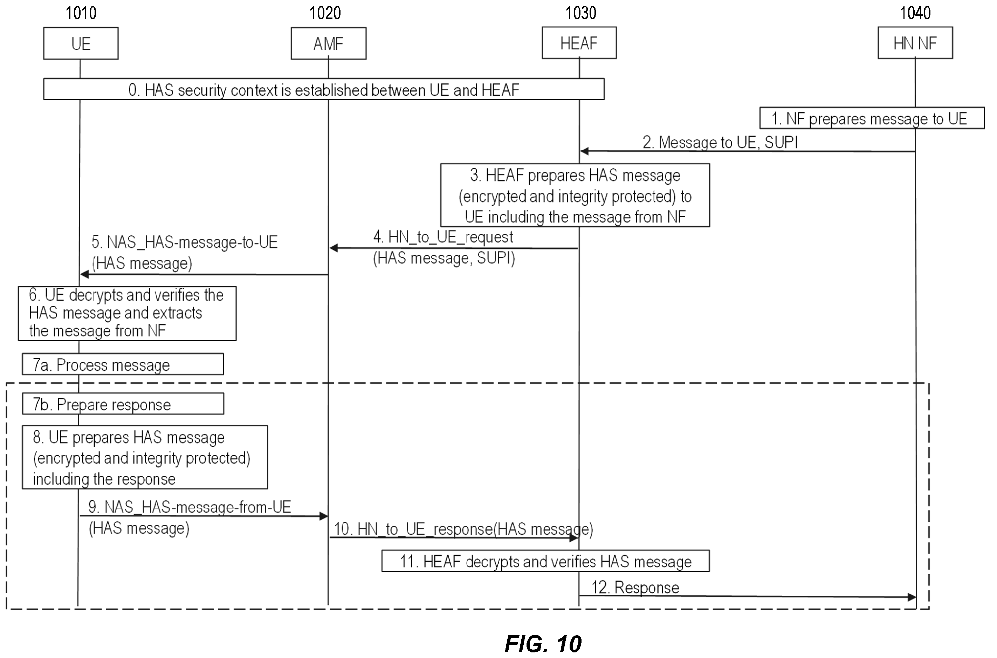

Figure 10 shows a signaling diagram of a procedure for HN-initiated HAS communication, according to some embodiments of the present disclosure. The procedure is between a UE (1010), an AMF (1020) in the UE's SN, an HEAF (1030), and a HN NF (1040) that communicates with the UE. As mentioned above, the SN may be a VPLMN (roaming case) or the UE's HN (non-roaming case). Although the operations shown in Figure 10 are given numerical labels, this is done to facilitate the following explanation rather than to require or imply any particular operational order, unless expressly stated otherwise.

In operation 0, which may be considered a pre-condition for the remaining operations, an HAS security context is established between UE and HEAF. This may be done in various ways, such as the example procedure shown in Figure 9. Although not shown, another precondition is the establishment of a NAS security context between UE and AMF in SN.

In operation 1, the HN NF prepares a message to send to the UE. In the embodiments shown in Figure 10, the HN NF neither encrypts nor integrity-protects this message; these operations are performed later by the HEAF, which acts as the security termination point.

In other embodiments, HAS security may be terminated at individual HN NFs. In these embodiments, the HN NF may have obtained a HAS security context for the UE, which may be NF-specific. The HN NF may perform encryption and integrity protection of the HAS message in operation 1, with the HEAF merely handling this message like a router. In some variants of these embodiments, there may also be security termination at HEAF, which may be used for UE-HEAF communications such as KHEAF key agreement as part of security mode command (SMC).

In operation 2, the HN NF sends the message to HEAF along with the SUPI of the UE. In operation 3, the HEAF prepares a HAS message to be sent to the UE. HEAF obtains the HAS security context for the particular UE associated with the SUPI, and uses the HAS keys and HAS COUNTs to encrypt and integrity protect the message.

In operation 4, the HEAF sends to the AMF an HN-to-UE request message that includes the HAS message and the target UE's SUPI. In operation 5, the AMF prepares an encrypted and integrity protected NAS message containing the HAS message, and sends the NAS message to the UE. Existing NAS keys and algorithms may be used for this operation. The NAS message may be a newly defined message called HAS-message-to-UE (as in Figure 9) or similar. Alternately, an existing NAS message (e.g., DL NAS Transport) may be used to carry the HAS message.

In some embodiments, the AMF does not encrypt the NAS message, instead relying on the encryption of the HAS message. In such embodiments, the AMF may still integrity-protect the NAS message using existing NAS keys and algorithms.

In operation 6, the UE first uses its NAS security context to decrypt and verify the NAS message. After extracting the HAS message, the UE uses its HAS security context to decrypt and verify the HAS message, and to extract the underlying message from the HN NF. In operation 7a, the UE processes the extracted message from the HN NF. In some cases, a response to the HN NF's message may be required. In such case, the procedure also includes operations 7b-12.

In operation 7b, the UE prepare a response to the HN NF's message. In operation 8, the UE uses its HAS security context to encrypt and integrity protect the response. In operation 9, the UE uses its NAS security context to encrypt and integrity protect the HAS message, which it sends in a NAS message called HAS-message-from-UE (as in Figure 9) or similar. Alternately, an existing NAS message (e.g., UL NAS Transport) may be used to carry the HAS message.

In some embodiments, the UE does not encrypt the NAS message, instead relying on the encryption of the HAS message. In such embodiments, the UE may still integrity-protect the NAS message using existing NAS keys and algorithms.

In operation 10, the AMF uses the NAS security context to decrypt and verify the NAS message, thereby extracting the HAS message from the UE. The AMF then sends the HAS message to the HEAF in a message called HN-to-UE-Response (as in Figure 9) or similar. In operation 11, the HEAF uses the HAS security context to decrypt and verify the HAS message, thereby obtaining the UE's response that it forwards to the HN NF in operation 12.

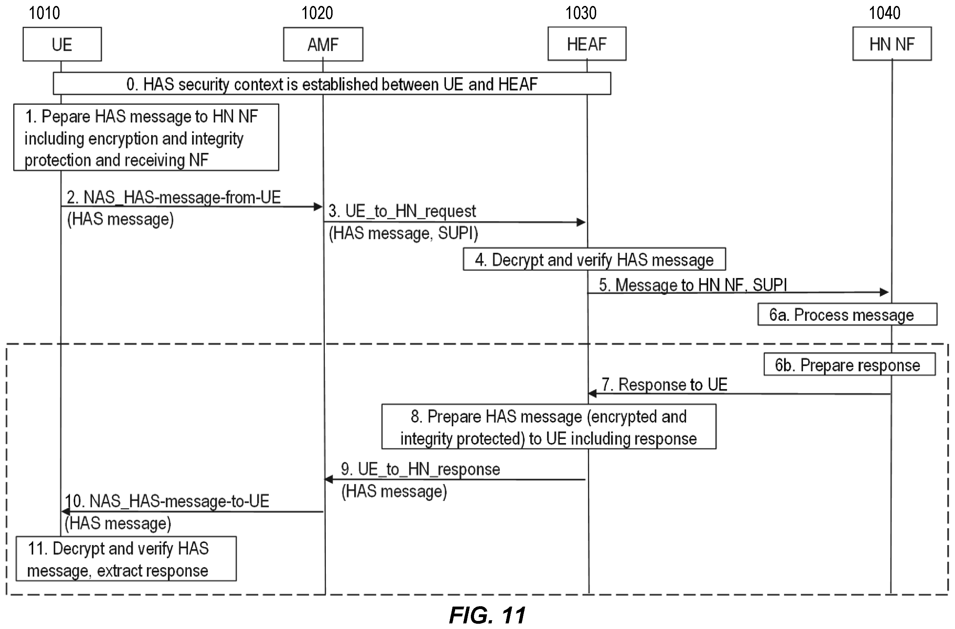

Figure 11 shows a signaling diagram of a procedure for UE-initiated HAS communication, according to other embodiments of the present disclosure. The procedure is between a UE (1010), an AMF (1020) in the UE's SN, an HEAF (1030), and a HN NF (1040) that communicates with the UE. As mentioned above, the SN may be a VPLMN (roaming case) or the UE's HN (non-roaming case). Although the operations shown in Figure 11 are given numerical labels, this is done to facilitate the following explanation rather than to require or imply any particular operational order, unless expressly stated otherwise.

In operation 0, which may be considered a pre-condition for the remaining operations, an HAS security context is established between UE and HEAF. This may be done in various ways, such as the example procedure shown in Figure 9. Although not shown, another precondition is the establishment of a NAS security context between UE and AMF in SN.

In operation 1, the UE prepares a message to send to the HN NF. The UE encrypts and integrity-protects this message using the HAS security context. In operation 2, the UE encrypts and integrity-protects this HAS message using the NAS security context, and sends the resulting NAS message to the AMF. This NAS message may be called HAS-message-from-UE (as in Figure 10) or a similar name. Alternately, an existing NAS message (e.g., UL NAS Transport) may be used.

In operation 3, the AMF uses the NAS security context to decrypt and verify the NAS message contents, including the HAS message. The AMF sends the HAS message to the HEAF together with the UE's SUPI. In operation 4, the HEAF uses the HAS security context to decrypt and verify the NAS message, thereby obtaining the underlying UE message to the HN NF as well as the UE's SUPI. In operation 5, the HEAF sends this message to the HN NF, together with the UE's SUPI. In operation 6a, the HN NF processes the message from the UE.

In some cases, a response to the UE's message may be required. In such case, the procedure also includes operations 6b-11. In operation 6b, the HN NF prepares a response to the UE's message. In operation 7, the HN NF sends the response to the HEAF. In operation 8, the HEAF uses its HAS security context to encrypt and integrity protect the response. In operation 9, the HEAF sends the HAS message to the AMF. This HAS message may be called UE-to-HN-response (as in Figure 11) or similar.

In operation 10, the AMF uses the NAS security context to encrypt and integrity protect the HAS message, thereby obtaining a NAS message to send to the UE. This NAS message may be called HAS-message-to-UE (as in Figure 11) or a similar name. In some embodiments, the AMF does not encrypt the NAS message, instead relying on the encryption of the HAS message included therein. In such embodiments, the AMF may still integrity-protect the NAS message using existing NAS keys and algorithms.

In operation 11, the UE first uses the NAS security context to decrypt and verify the NAS message, thereby obtaining the included HAS message. The UE then uses the HAS security context to decrypt and verify the HAS message, thereby obtaining the HN NF's response.

As mentioned above, in the distributed architecture embodiments, there may be multiple HEAFs within the HN, each used for different procedures with the UE. In the most distributed case, each HN NF includes and/or implements HEAF functionality. In the distributed architecture, each HEAF uses a different K_{HEAF} derived by AUSF from K_{AUSF} and some HEAF identifying information (e.g., identifier, name, address, etc.) from the HEAF's SBA certificate or other available source. The HEAF identifying information needs to be provided to the UE (e.g., in a HAS security mode command, SMC) for use in the UE's key derivation. When the HEAF functionality is integrated in (or hosted by) existing NFs (e.g., UDM, PCF, SMF), the HEAF identifying information may be the same as the identifying information of the hosting NF (or of an NF set if the NF is part of an NF set).

In the distributed architecture, for a UE-initiated HAS message (e.g., Figure 10), the AMF needs to know to which HEAF/HN NF to send the HAS message initiated by the UE as well as what NF service operation to call. The target HEAF/HN NF needs to be specified in the UE's NAS message or in an unencrypted part of the included HAS message. The list of HN NF service operations that can be invoked by the UE may be provided from the HN to the UE in a HAS SMC procedure.

In some embodiments, HAS message containers are interleaved with NAS message containers on the CP bearer between UE and AMF (via serving RAN node). Both NAS message headers and HAS message headers contain an identifier allowing the recipient (e.g., UE or AMF) to separate the two types of messages. This may enable the use of HAS between UE and HEAF even when there is no NAS established between UE and AMF.

In some embodiments, after UE and HN have established a common key (e.g., K_{HEAF} or keys derived therefrom), the UE and HN may communicate via UP. This may be useful when the UE needs to communicate with an AF in the HN, e.g., via a home routed PDU session from a UE roaming in a VPLMN to an AF in the HN. Existing Authentication and Key Management for Applications (AKMA) using 3GPP credentials may be used for subsequent UE-AF key derivations based on K_{HEAF}. For example, some procedures described in the concurrently filed application mentioned above may be used for these purposes.

In general, the decrypted content of communication between UE and HN AF should be accessible for lawful intercept (LI) in the SN. Alternately, encryption keys (e.g., K_{HEAF} or K_{AF}, etc. derived therefrom) and key derivation parameters for the UE-AF communication need to be available. If the HN AF and UE use the HN NF-UE communication such as in Figures 10-11, the HN can send K_{HEAF}/K_{AF} derivation parameters in cleartext or integrity protected in the HN NF message to the UE via the AMF.

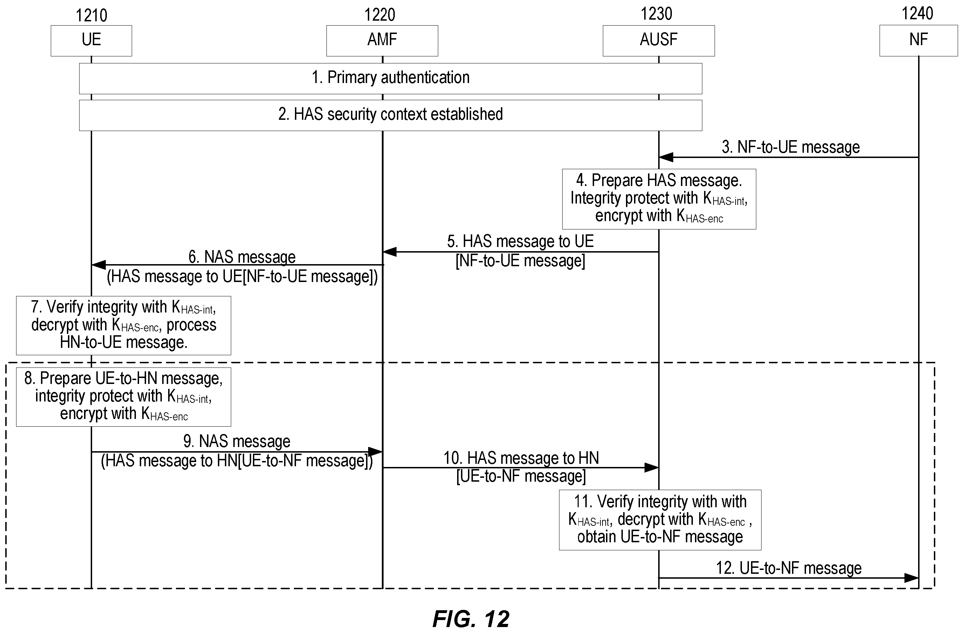

Figure 12 shows a signaling diagram of a procedure for HN-initiated HAS communication, according to other embodiments of the present disclosure. The procedure is between a UE (1210), an AUSF (1220) in the UE's SN, an AUSF (1230) in the UE's HN, and an NF (1240) in the UE's HN. As mentioned above, the SN may be a VPLMN (roaming case) or the UE's HN (non-roaming case). Although the operations shown in Figure 12 are given numerical labels, this is done to facilitate the following explanation rather than to require or imply any particular operational order, unless expressly stated otherwise.

In operation 1, primary authentication of the UE is performed with the HN, with K_{AUSF} and security capabilities for the UE being stored in AUSF. These operations may also involve the UDM in the HN. In operation 2, a HAS security context is established between UE and AUSF. This may be done in various ways, such as the example procedure shown in Figure 9.

In operation 3, the NF forms a message to be sent to the UE, and sends it to the AUSF (i.e., as HAS anchor) in an NF-to-UE message. In operation 4, the AUSF identifies the AMF serving the UE in the SN, integrity protects the NF-to-UE message with K_{HAS-int} from the HAS security context, and encrypts the NF-to-UE message with K_{HAS-enc} from the HAS security context, and prepares a HAS message to the UE that includes (or encapsulates) the encrypted and integrity protect NF-to-UE message. In operation 5, the AUSF sends the HAS message to the AMF serving the UE in the SN.

In operation 6, the AMF forms a NAS message that includes the received HAS message, and sends the NAS message to the UE. In some embodiments, the NAS message may be encrypted and/or integrity protected using a NAS security context established between the UE and the AMF. In operation 7, the UE verifies integrity of the HAS message using K_{HAS-int} from the HAS security context, decrypts the HAS message using K_{HAS-enc} from the HAS security context, and extracts the NF-to-UE message. If the NAS message is encrypted and/or integrity protected using a NAS security context established between the UE and the AMF, the UE may perform corresponding NAS decryption and integrity verification operations to obtain the HAS message.

Operations 8-12 may be used if the UE needs to send a message (e.g., response) to the NF in the HN. In operation 8, the UE prepares a UE-to-NF message, integrity protects the UE-to-NF message with K_{HAS-int} from the HAS security context, encrypts the UE-to-NF message with K_{HAS-enc} from the HAS security context, and prepares a HAS message to the NF that includes (or encapsulates) the encrypted and integrity protect UE-to-NF message. In operation 9, the UE sends the AMF a NAS message that includes the HAS message. In some embodiments, the NAS message may be encrypted and/or integrity protected using a NAS security context established between the UE and the AMF.

In operation 10, the AMF extracts the HAS message from the received NAS message and sends the HAS message to the AUSF in the UE's HN. If the NAS message is encrypted and/or integrity protected using a NAS security context established between the UE and the AMF, the AMF may perform corresponding NAS decryption and integrity verification operations to obtain the HAS message. In operation 11, the AUSF verifies integrity of the HAS message using K_{HAS-int} from the HAS security context, decrypts the HAS message using K_{HAS-enc} from the HAS security context, and extracts the UE-to-NF message. Assuming verification in operation 11 is successful, the AUSF sends the UE-to-NF message to the NF in operation 12.

In some embodiments, after UE and HN have established a common key (e.g., K_{HEAF} or keys derived therefrom), the UE and HN may communicate via UP. This may be useful when the UE needs to communicate with an AF in the HN, e.g., via a home routed PDU session from a UE roaming in a SN to an AF in the HN. Existing Authentication and Key Management for Applications (AKMA) using 3GPP credentials may be used for subsequent UE-AF key derivations based on K_{HEAF}. For example, the procedure shown in Figure 12 may be used between the UE and HN AF to agree on these key derivation parameters.

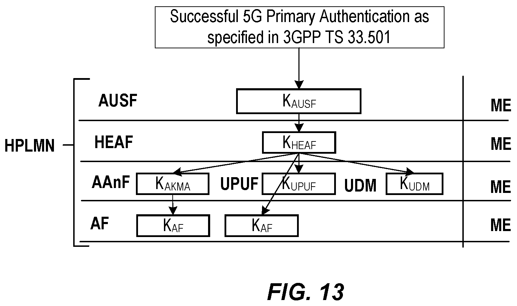

Figure 13 shows an example key hierarchy for HAS communications, according to some embodiments of the present disclosure. In this example, K_{AUSF} at top of the hierarchy is a result of a successful primary authentication of the UE, such as specified in 3GPP TS 33.501. Next, K_{HEAF} (or similar name) is derived from K_{AUSF} during HAS security context establishment, such as discussed above. Subsequently, various UP-related keys may be derived from K_{HEAF}, including K_{AKMA} used by an AKMA Anchor Function (AAnF) and the UE, K_{UPUF} used by a UPUF and the UE, K_{UDM} used by the UDM and the UE, and K_{AF} used by an application function (AF) in the HN and the UE.

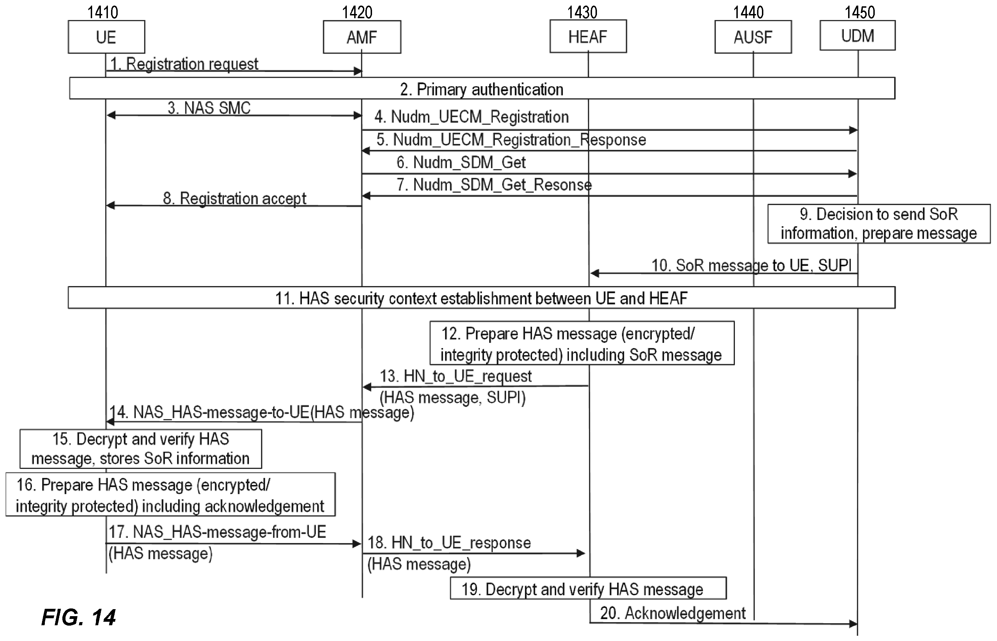

Figure 14 shows a signaling diagram of an example procedure for steering of roaming (SoR) that is based on embodiments of HAS discussed above. The procedure is between a UE (1410) and an AMF (1420) in the UE's VPLMN, as well as an HEAF (1430), AUSF (1440), and UDM (1450) in the UE's HN. Although SoR is specific to a roaming scenario, the principles illustrated by Figure 14 may also be applied in a non-roaming scenario where the HN is the UE's SN. Although the operations shown in Figure 14 are given numerical labels, this is done to facilitate the following explanation rather than to require or imply any particular operational order, unless expressly stated otherwise.

Operations 1-6 are similar to corresponding operations 1-6 in Figure 4, described above. In operation 7, the UDM sends an Nudm_SDM_Get_Response to the AMF, which in turn sends a registration accept message to the AMF in operation 8.

In operation 9, the UDM decides to send steering of roaming (SoR) information to the UE and prepares the relevant message. This operation may be similar to corresponding operation 7 in Figure 4, described above. In operation 10, the UDM sends to HEAF the SoR message prepared in operation 9 along with the UE's SUPI. In this case, the UDM is acting as the HN NF shown in Figures 10-11.

In operation 11, an HAS security context is established between UE and HEAF. This establishment can be considered "on-demand" since it is triggered by the SoR message. The details of these operations are outside of the scope of the present disclosure. However, establishment of the HAS security context may involve other NFs in the HN, such as AUSF and UDM. Note that the NAS security context between UE and AMF in VPLMN was established in operations 1-8.

After establishment of the HAS security context, in operation 12 the HEAF prepares a HAS message including the SoR message from the UDM. This operation may be similar to operation 3 in Figure 10, described above. Additionally, operations 14-19 may be similar to operations 4-11 in Figure 10, described above. For example, the acknowledgement prepared and sent by the UE in Figure 14 may correspond to the response in Figure 10.

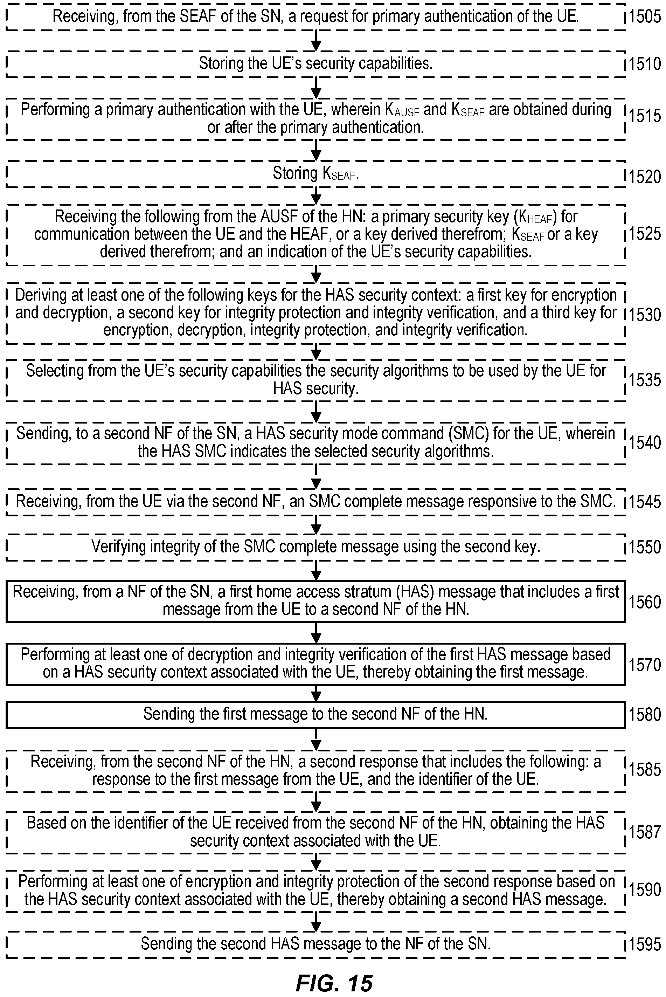

The embodiments described above can be further illustrated with reference to Figures 15-17, which depict exemplary methods (e.g., procedures) for a first NF of a UE's HN, the UE, and an NF of the UE's SN, respectively. Put differently, various features of the operations described below correspond to various embodiments described above, even if the corresponding descriptions do not use identical terms. The exemplary methods shown in Figures 12-14 may be used cooperatively to provide benefits, advantages, and/or solutions to problems described herein. Although the exemplary methods are illustrated in Figures 12-14 by specific blocks in particular orders, the operations corresponding to the blocks may be performed in different orders than shown and may be combined and/or divided into blocks and/or operations having different functionality than shown. Optional blocks or operations are indicated by dashed lines.

More specifically, Figure 15 illustrates an exemplary method (e.g., procedure) for a first NF of a HN for a UE configured to operate in an SN, according to various embodiments of the present disclosure. The exemplary method shown in Figure 15 may be performed by any appropriate NF (or network equipment configured to implement the same) such as described elsewhere herein.

The exemplary method includes the operations of block 1560, where the first NF receives, from an NF of the SN, a first HAS message that includes a first message from the UE to a second NF of the HN. The exemplary method also includes the operations of block 1570, where the first NF performs at least one of decryption and integrity verification of the first HAS message based on a HAS security context associated with the UE, thereby obtaining the first message. The HAS security context is based on a security key (K_{AUSF}) associated with an AUSF) of the HN. The exemplary method also includes the operations of block 1580, where the first NF sends the first message to the second NF of the HN.

In some embodiments, the exemplary method also includes the operations of block 1530, wherein the first NF derives at least one of the following keys for the HAS security context:
- a first key for HAS encryption and decryption;
- a second key for HAS integrity protection and integrity verification; and
- a third key for HAS encryption, decryption, integrity protection, and integrity verification.

In some of these embodiments, the first NF of the HN is a home environment anchor function (HEAF), the first message is sent together with an identifier of the UE, and the first HAS message is received in a request that also includes the identifier of the UE. In some variants of these embodiments, the HAS security context includes a key (K_{HEAF}) derived from K_{AUSF} and one of the following derived from K_{HEAF}:
- the first and second keys, based on which the at least one of decryption and integrity verification are performed in block 1530; or
- the third key, based on which the at least one of decryption and integrity verification are performed in block 1530.

In some variants of these embodiments, the exemplary method also includes the following operations, labelled with corresponding block numbers:
- (1585) receiving, from the second NF of the HN, a second response that includes the following: a response to the first message from the UE, and the identifier of the UE;
- (1590) performing at least one of encryption and integrity protection of the second response based on the HAS security context associated with the UE, thereby obtaining a second HAS message; and
- (1595) sending the second HAS message to the NF of the SN.

In some variants of these embodiments, the HEAF is a centralized function of the HN and/or the HEAF facilitates communication by all NFs of the HN with UEs in SNs. In other variants of these embodiments, the HEAF is a distributed function of the HN and/or the HEAF facilitates communication by one of the following with UEs in SNs: a particular NF, a particular type of NF, or a particular set of NFs of a single type.

In some variants of these embodiments, the exemplary method also includes the operations of block 1587, where based on the identifier of the UE received from the second NF of the HN, the first NF obtains the HAS security context associated with the UE.

In other of these embodiments, the HAS security context is further based on a security key (K_{SEAF}) associated with a security anchor function (SEAF) of the SN, and one or more of the following applies:
- the decryption of the first message is based on a first key included in the HAS security context; and
- the integrity verification of the first message is based on a second key included in the HAS security context.

In some variants of these embodiments, the first NF of the HN is the AUSF and the exemplary method also includes one or more of the following operations, labelled with corresponding block numbers:
- (1515) performing a primary authentication with the UE, wherein K_{AUSF} and K_{SEAF} are obtained during or after the primary authentication; and
- (1520) storing K_{SEAF}.
In such variants, the first key is derived based on K_{SEAF} and/or the second key is derived based on KAUSF.

In some further variants, the first key is derived from a first intermediate key, with the first intermediate key being derived from K_{SEAF}. In some further variants, the second key is derived from a second intermediate key, with the second intermediate key being derived from K_{AUSF}. In some further variants, the exemplary method also includes the following operations, labelled with corresponding block numbers:
- (1505) receiving, from the SEAF of the SN, a request for primary authentication of the UE, wherein the request includes the following: a concealed identifier of the UE, and an indication of the UE's security capabilities; and
- (1510) in response to the request, storing the UE's security capabilities and performing the primary authentication with the UE.

In other variants of these embodiments, the first NF of the HN is a HEAF different from the AUSF, and the exemplary method also includes the operations of block 1525, where the first NF receives the following from the AUSF of the HN:
- a primary security key (K_{HEAF}) for communication between the UE and the HEAF, or a key derived from K_{HEAF};
- K_{SEAF} or a key derived from K_{SEAF}; and
- an indication of the UE's security capabilities.
In these variants, one or more of the following applies: the first key is derived from K_{SEAF} or the key derived from K_{SEAF}, and the second key is derived from K_{HEAF} or the key derived from K_{HEAF}

In some variants of these embodiments, the exemplary method also includes the following operations, labelled with corresponding block numbers::
- (1535) selecting from the UE's security capabilities the security algorithms to be used by the UE for HAS security; and
- (1540) sending, to a second NF of the SN, a HAS security mode command (SMC) for the UE, wherein the HAS SMC indicates the selected security algorithms.

In some further variants, one or more of the following applies: the HAS SMC is not encrypted, and the HAS SMC is integrity protected based on the second key. In some further variants, the exemplary method also includes the following operations, labelled with corresponding block numbers:
- (1545) receiving, from the UE via the second NF of the SN, an SMC complete message responsive to the SMC; and
- (1550) verifying integrity of the SMC complete message using the second key.

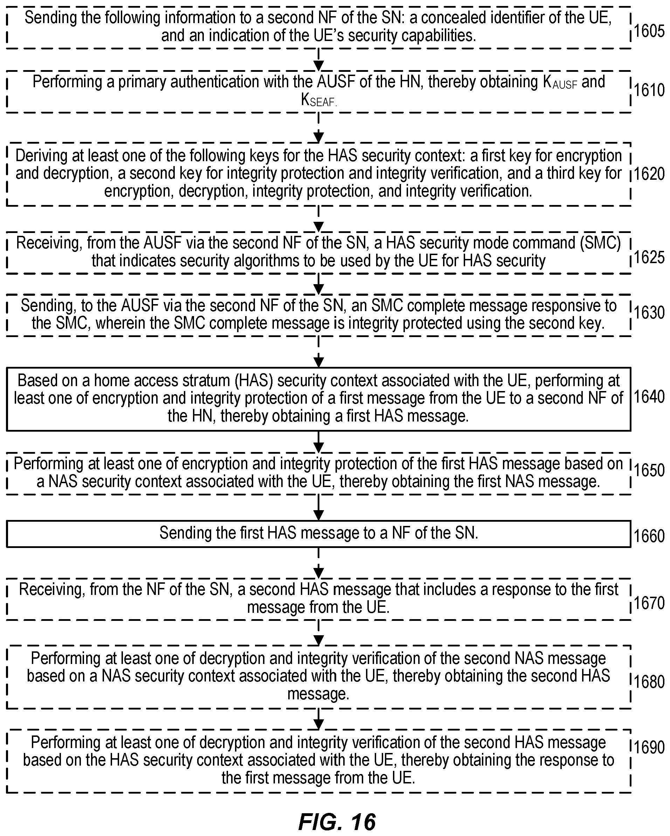

In addition, Figure 16 illustrates an exemplary method (e.g., procedure) for a UE configured with a HN and to operate in an SN, according to various embodiments of the present disclosure. The exemplary method shown in Figure 16 may be performed by any appropriate UE (e.g., wireless device) such as described elsewhere herein.

The exemplary method includes the operations of block 1640, where based on a HAS security context associated with the UE, the UE performs at least one of encryption and integrity protection of a first message from the UE to a second NF of the HN, thereby obtaining a first HAS message. The exemplary method also includes the operations of block 1660, where the UE sends the first HAS message to an NF of the SN. The HAS security context is based on a security key (K_{AUSF},) associated with an AUSF of the HN.

In some embodiments, the first HAS message is sent in a first NAS message to the NF of the SN and the exemplary method also includes the operations of block 1650, where the UE performs at least one of encryption and integrity protection of the first HAS message based on a NAS security context associated with the UE, thereby obtaining the first NAS message.

In some embodiments, the exemplary method also includes the operations of block 1620, wherein the UE derives at least one of the following keys for the HAS security context:
- a first key for HAS encryption and decryption;
- a second key for HAS integrity protection and integrity verification; and
- a third key for HAS encryption, decryption, integrity protection, and integrity verification.

In some of these embodiments, the HAS security context includes a key (K_{HEAF}) derived from K_{AUSF} and one of the following derived from K_{HEAF}:
- the first and second keys, based on which the at least one of encryption and integrity protection are performed; or
- the third key, based on which the at least one of encryption and integrity protection are performed.

In some variants of these embodiments, the exemplary method also includes the following operations, labelled with corresponding block numbers:
- (1670) receiving, from the NF of the SN, a second HAS message that includes a response to the first message from the UE; and
- (1690) performing at least one of decryption and integrity verification of the second HAS message based on the HAS security context associated with the UE, thereby obtaining the response to the first message from the UE.

In some further variants, the second HAS message is received from the AMF in a second NAS message and the exemplary method also includes the operations of block 1680, where the UE performs at least one of decryption and integrity verification of the second NAS message based on a NAS security context associated with the UE, thereby obtaining the second HAS message.

In other of these embodiments, the HAS security context is further based on a security key (K_{SEAF}) associated with a security anchor function (SEAF) of the SN, and the exemplary method also includes the operations of block 1610, where the UE performs a primary authentication with the AUSF of the HN, thereby obtaining K_{AUSF} and K_{SEAF}.

In some variants of these embodiments, the encryption of the first message is based on the first key, which is derived based on K_{SEAF}. In some further variants, the first key is derived from a first intermediate key, with the first intermediate key being derived from K_{SEAF}. In some variants of these embodiments, the integrity protection of the first message is based on the second key, which is derived based on K_{AUSF}. In some further variants, the second key is derived from a second intermediate key, with the second intermediate key being derived from K_{AUSF}.

In some variants of these embodiments, the exemplary method also includes the operations of block 1605, where the UE sends the following information to a second NF of the SN: a concealed identifier of the UE, and an indication of the UE's security capabilities. In such variants, the primary authentication is performed responsive to the information sent to the second NF.

In some variants of these embodiments, the exemplary method also includes the operations of block 1625, where after completion of the primary authentication in block 1610, the UE receives, from the AUSF via the second NF of the SN, a HAS SMC that indicates security algorithms to be used by the UE for HAS security. In some further variants, the HAS SMC is not encrypted. In some further variants, the HAS SMC is integrity protected based on the second key. In some further variants, the exemplary method also includes the operations of block 1630, where the UE sends, to the AUSF via the second NF of the SN, an SMC complete message responsive to the SMC. The SMC complete message is integrity protected using the second key.

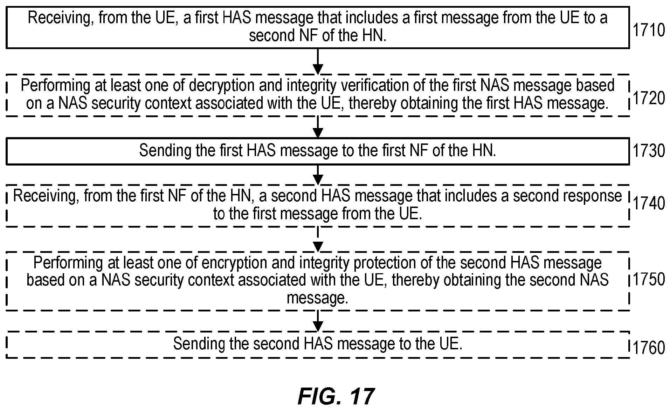

In addition, Figure 17 illustrates an exemplary method (e.g., procedure) for an NF of a SN for a UE configured with a HN, according to various embodiments of the present disclosure. The exemplary method shown in Figure 17 may be performed by any appropriate NF (or network equipment configured to implement the same) such as described elsewhere herein.

The exemplary method includes the operations of block 1710, where the NF receives, from the UE, a first HAS message that includes a first message from the UE to a second NF of the HN. The exemplary method also includes the operations of block 1730, where the NF sends the first HAS message to a first NF of the HN.

In some embodiments, the UE and the first NF of the HN are associated with a HAS security context is associated with / includes at least one of the following keys:
- a first key for HAS encryption and decryption;
- a second key for HAS integrity protection and integrity verification; and
- a third key for HAS encryption, decryption, integrity protection, and integrity verification.

In some of these embodiments, the first NF of the HN is a HEAF and the first HAS message is sent in a request that also includes an identifier of the UE. In some variants of these embodiments, the HAS security context includes the following:
- a key (K_{HEAF}) derived from a security key (K_{AUSF}) associated with an AUSF of the HN;
   and
- one of the following derived from K_{HEAF}: the first key and the second key, or the third key.
In some further variants, the first HAS message is encrypted based on the first key or the third key. In some further variants, the first HAS message is integrity protected based on the second key or the third key.

In some variants of these embodiments, the exemplary method also includes the following operations, labelled with corresponding block numbers:
- (1740) receiving, from the first NF of the HN, a second HAS message that includes a second response to the first message from the UE; and
- (1760) sending the second HAS message to the UE.
In some further variants, the second HAS message is sent to the UE in a second NAS message and the exemplary method also includes the operations of block 1750, where the NF performs at least one of encryption and integrity protection of the second HAS message based on a NAS security context associated with the UE, thereby obtaining the second NAS message.

In other of these embodiments, the first key is derived based on a security key (K_{SEAF}) associated with a SEAF of the SN and/or the second key is derived based on a security key (K_{AUSF}) associated with an AUSF of the HN. In some variants of these embodiments, one or more of the following applies:
- the first key is derived from a first intermediate key, with the first intermediate key being derived from K_{SEAF}; and
- the second key is derived from a second intermediate key, with the second intermediate key being derived from K_{AUSF}.

The following description applies to all embodiments described above in relation to Figures 15-17.

In some embodiments, the NF of the SN is an AMF or an SMF. In some embodiments, the second NF of the SN is an SEAF or an AMF. In some embodiments, the first NF of the HN is one of the following: the AUSF, a HEAF included in the AUSF, or a HEAF not included in the AUSF.

In some embodiments, the SN is different from the HN (e.g., in the roaming case). In other embodiments, the SN is the HN (e.g., in the non-roaming case). In some embodiments, the first message from the UE to the second NF of the HN is accessible by the SN for lawful intercept (LI).

Although various embodiments are described herein above in terms of methods, apparatus, devices, computer-readable medium and receivers, the person of ordinary skill will readily comprehend that such methods can be embodied by various combinations of hardware and software in various systems, communication devices, computing devices, control devices, apparatuses, non-transitory computer-readable media, etc.

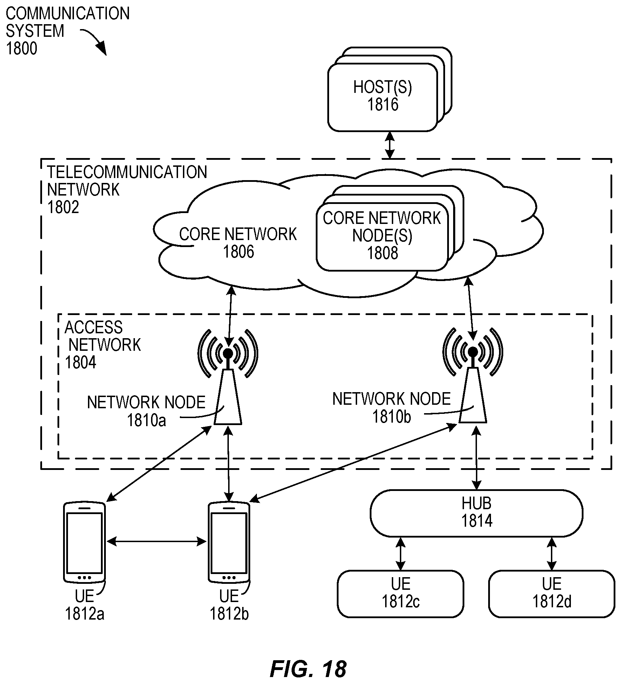

Figure 18 shows an example communication system 1800 according to some embodiments. In this example, communication system 1800 includes a telecommunication network 1802 that includes an access network 1804 (e.g., RAN) and a core network 1806, which includes one or more core network nodes 1808. Access network 1804 includes one or more access network nodes, such as access network nodes 1810a-b (one or more of which may be generally referred to as network nodes 1810), or any other similar 3GPP access nodes or non-3GPP access points (APs). Some embodiments of the access network 1804 may include more than one access network technology. Access network nodes 1810 of access network 1804 facilitate direct or indirect connection of wireless devices, to the core network 1806 over one or more wireless connections. Such wireless devices may also referred to as user equipment (UEs), with UEs 1812A-D (one or more of which may be generally referred to as UEs 1812) shown by way of example.

Moreover, such network nodes are not necessarily limited to implementations in which a radio portion and a baseband portion are supplied and integrated by a single vendor. Rather, the network nodes may include disaggregated implementations. For example, in some embodiments, telecommunication network 1802 includes one or more Open-RAN (ORAN) network nodes. An ORAN network node is a node in telecommunication network 1802 that supports an ORAN specification (e.g., a specification published by the O-RAN Alliance, or any similar organization) and may operate alone or together with other nodes to implement one or more functionalities of any node in telecommunication network 1802, including one or more access network nodes 1810 and/or core network nodes 1808.

Examples of an ORAN network node include an open radio unit (O-RU), an open distributed unit (O-DU), an open central unit (O-CU), including an O-CU control plane (O-CU-CP) or an O-CU user plane (O-CU-UP), a RAN intelligent controller (near-real time or non-real time) hosting software or software plug-ins, such as a near-real time control application (e.g., xApp) or a non-real time control application (e.g., rApp), or any combination thereof (the adjective "open" designating support of an ORAN specification). The network node may support a specification by, for example, supporting an interface defined by the ORAN specification, such as an A1, F1, W1, E1, E2, X2, Xn interface, an open fronthaul user plane interface, or an open fronthaul management plane interface. Moreover, an ORAN access node may be a logical node in a physical node. Furthermore, an ORAN network node may be implemented in a virtualization environment (described further below) in which one or more network functions are virtualized. For example, the virtualization environment may include an O-Cloud computing platform orchestrated by a Service Management and Orchestration Framework via an O-2 interface defined by the O-RAN Alliance or comparable technologies.

Access network nodes 1810 facilitate direct or indirect connection of UEs, such as by connecting UEs 1812, to core network 1806 over one or more wireless connections. Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, communication system 1800 may include any number of wired or wireless networks, network nodes, UEs, and/or any other components or systems that may facilitate or participate in the communication of data and/or signals whether via wired or wireless connections. Communication system 1800 may include and/or interface with any type of communication, telecommunication, data, cellular, radio network, and/or other similar type of system.

UEs 1812 may be any of a wide variety of communication devices, including wireless devices arranged, configured, and/or operable to communicate wirelessly with access network nodes 1810 and other communication devices. Similarly, access network nodes 1810 are arranged, capable, configured, and/or operable to communicate directly or indirectly with UEs 1812 and/or with other network nodes or equipment in telecommunication network 1802 to enable and/or provide network access, such as wireless network access, and/or to perform other functions, such as administration in telecommunication network 1802.

More specifically, UEs 1812 may send messages, data, and/or other signals to network nodes 1808, 1810 or other elements of the telecommunications network 1802 by transmitting such signals to the relevant device directly without the signals passing through any intervening devices or by transmitting such signals to the relevant device indirectly through an intervening device (or multiple intervening devices) that then transmit the signal to the relevant device. Similarly, network nodes 1808, 1810 may send messages, data, and other signals to UEs 18122, other network nodes 1808, 1810, and other devices in telecommunications network 1802 directly or indirectly. As one specific example, core network node 108 may transmit a particular message to a UE 1812 by transmitting the message to an access network node 1810, which will then transmit the message to the UE 1812. Similarly, core network node 108 may receive a particular message from a UE 1812 by receiving the message from an access network node 1810 that itself received the message from the UE 1812.

As shown in Figure 18, core network 1806 connects elements of access network 1804 (e.g., one or more of access network nodes 1810) to one or more host computing systems, such as host 1816. These connections may be direct or indirect via one or more intermediary networks or devices. In other examples, network nodes may be directly coupled to hosts. Core network 1806 may include one or more core network nodes (e.g., 1808) that are structured with hardware and software components. Features of these components may be substantially similar to those described with respect to the UEs, network nodes, and/or hosts, such that the descriptions thereof are generally applicable to the corresponding components of core network node 1808. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

Host 1816 may be under the ownership or control of a service provider other than an operator or provider of access network 1804 and/or telecommunication network 1802, and may be operated by the service provider or on behalf of the service provider. Host 1816 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, communication system 1800 of Figure 18 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

Moreover, communication system 1800 may be configured to support multiple different standards, protocols, or other rule sets, with individual components supporting all of the relevant rule sets or with different components or sub-systems within the communication system 1800 supporting different standards, protocols, or rule sets. As one example, access network 1804 may contain some access network nodes 1810 that support 3GPP radio access technologies (RAT), such as LTE or NR, while the same (or other) access network nodes 1810 (non-3GPP RATs, such as Wi-Fi or a proprietary RAT. As another example, telecommunications network 1802 may support multiple generations of related communication standards (e.g., 3GPP 4G and 5G standards) and, as a result, access network 1804 and/or core network 1806 may support multiple generations of related communication standards. Alternately, telecommunications network 1802 may include multiple access networks 1804 and/or multiple core networks 1806, which support respective generations of standards.

In some embodiments, telecommunications network 1802 may support network slicing to provide different logical networks to different devices that are connected to the telecommunications network 1802. For example, the telecommunications network 1802 may provide Ultra Reliable Low Latency Communication (URLLC) services to some UEs, while providing Enhanced Mobile Broadband (eMBB) services to other UEs, and/or Massive Machine Type Communication (mMTC)/Massive IoT services to yet further UEs.

In some examples, one or more of UEs 1812 may be configured to transmit and/or receive information without direct human interaction. For instance, a UE may be designed to transmit information to access network 1804 on a predetermined schedule, when triggered by an internal or external event, or in response to requests from access network 1804. Additionally, a UE may be configured for operating in single- or multi-RAT or multi-standard mode. For example, a UE may operate with any one or combination of Wi-Fi, NR (New Radio) and LTE, i.e., being configured for multi-radio dual connectivity (MR-DC), such as E-UTRAN/NR dual connectivity (EN-DC).

According to the example shown in Figure 18, hub 1814 communicates with access network 1804 to facilitate indirect communication between one or more UEs (e.g., 1812C and/or 1812D) and network nodes (e.g., network node 1810b). In some examples, hub 1814 may be a controller, router, content source and analytics, or any of the other communication devices described herein regarding UEs. For example, hub 1814 may be a broadband router enabling access to core network 1806 for the UEs. As another example, hub 1814 may be a controller that sends commands or instructions to one or more actuators in the UEs. Commands or instructions may be received from the UEs, access network nodes 1810, or by executable code, script, process, or other instructions in hub 1814.

As another example, hub 1814 may be a data collector that acts as temporary storage for UE data and, in some embodiments, may perform analysis or other processing of the data. As another example, hub 1814 may be a content source. For example, for a UE that is a VR headset, display, loudspeaker or other media delivery device, hub 1814 may retrieve VR assets, video, audio, or other media or data related to sensory information via a network node, which hub 1814 then provides to the UE either directly, after performing local processing, and/or after adding additional local content. In still another example, hub 1814 acts as a proxy server or orchestrator for the UEs, in particular if one or more of the UEs are low energy IoT devices.

Hub 1814 may have a constant/persistent or intermittent connection to network node 1810b. Hub 1814 may also allow for a different communication scheme and/or schedule between hub 1814 and UEs (e.g., 1812C and/or 1812D), and between hub 1814 and core network 1806. In other examples, hub 1814 is connected to core network 1806 and/or one or more UEs via a wired connection. Moreover, hub 1814 may be configured to connect to an M2M service provider over access network 1804 and/or to another UE over a direct connection. In some scenarios, UEs may establish a wireless connection with access network nodes 1810 while still connected via hub 1814 via a wired or wireless connection. In some embodiments, hub 1814 may be a dedicated hub - that is, a hub whose primary function is to route communications to/from the UEs from/to network node 1810b. In other embodiments, hub 1814 may be a non-dedicated hub - that is, a device which is capable of operating to route communications between the UEs and network node 1810b, but which is additionally capable of operating as a communication start and/or end point for certain data channels.

In some embodiments, any of UEs 1812 may be configured to perform operations attributed to a UE in various methods or procedures described above, including the exemplary methods shown in Figures 9-12, 14, and 16. In some embodiments, any of core network nodes 1808 may be configured to perform operations attributed to an NF of a UE's HN in various methods or procedures described above, including the exemplary methods shown in Figures 9-12 and 14-15. In some embodiments, any of core network nodes 1808 may be configured to perform operations attributed to an NF of a UE's SN in various methods or procedures described above, including the exemplary methods shown in Figures 9-12, 14, and 17.

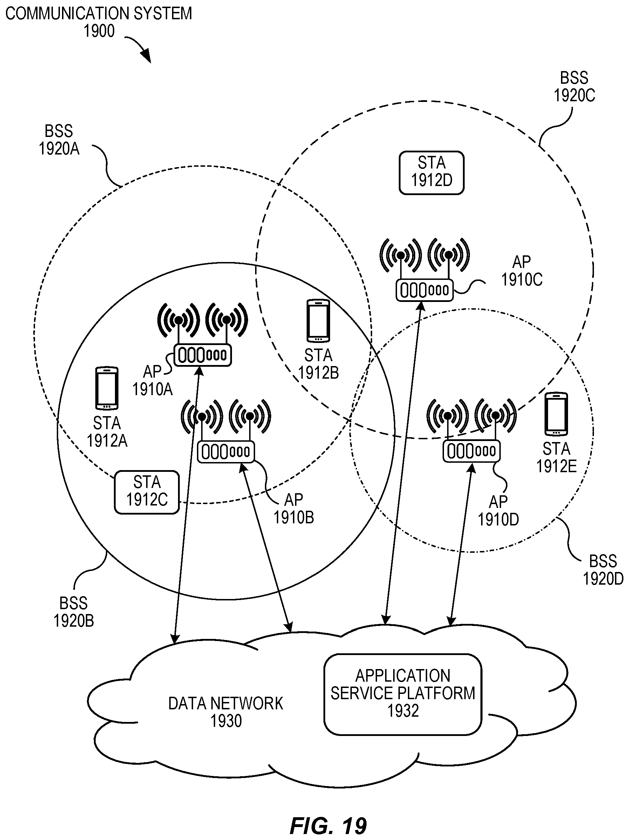

Figure 19 shows another example communication system 1900 according to some embodiments. In this example, communication system 1900 includes multiple access points (APs) (e.g., APs 1910A-D) and multiple wireless devices 1912A-E, which may also be referred to in this context as stations (STAs) 1912A-E (or collectively as STAs 1912).

Each STA 1912A-E connect through a radio link to one of APs 1910. For example, depending on location or channel conditions experienced by a particular STA, the STA may select an appropriate AP and basic service set (BSS) for establishing the radio link. The radio link may be based on one or more orthogonal frequency-division multiplexing (OFDM) carriers from a frequency spectrum that is shared on the basis of a contention-based mechanism, e.g., an unlicensed or license exempt band like 2.4 GHz Industrial, Scientific, and Medical (ISM) band, 5-GHz band, 6-GHz band, 60-GHz band, etc. In the specific example shown, STA 1912A is served by AP 1910A in a first BSS 1920A, STA 1910B-C are served by AP 1910B in a second BSS 1920B, STA 1912D is served by AP 1910C in a third BSS 1920C, and STA 1912E is served by AP 1910D in a fourth BSS 1920D.

STAs 1912 may be non-AP STAs and correspond to various kinds of wireless devices such as user terminals, mobile or stationary computing devices, smartphones, laptop computers, desktop computers, tablet computers, gaming devices, head-mounted displays (HMDs) for Augmented Reality (AR) or Virtual Reality (VR), smart home devices, printers, multimedia devices, data storage devices, etc.

As illustrated, APs 1910 may be connected to a data network 1930, enabling each AP to provide data connectivity between STAs 1912 and other entities in data network 1930 (e.g., servers, service providers, data sources, data sinks, user terminals, etc.). Accordingly, a radio link established between a particular STA 1912 and its serving AP 1910 may be used for providing various kinds of services to STA 1912, such as voice, multimedia, data, etc. Such services may be based on applications that are executed on STA 1912 and/or on a device linked to STA 1912.

In the example shown in Figure 19, data network 1930 includes application service platform 1932, with which application(s) executed on any of STAs 1912 (and/or on one or more other devices linked to STAs 1912) may communicate via the respective radio links between STAs 1912 and their respective serving APs 1910. Such communication may facilitate efficient utilization of the corresponding service(s) at STA 1912.

In some embodiments, any of STAs 1912 may be configured to perform operations attributed to a UE in various methods or procedures described above, including the exemplary methods shown in Figures 9-12, 14, and 16. In some embodiments, application service platform 1932 may be configured to perform operations attributed to an NF of a UE's HN in various methods or procedures described above, including the exemplary methods shown in Figures 9-12 and 14-15. In some embodiments, application service platform 1932 may be configured to perform operations attributed to an NF of a UE's SN in various methods or procedures described above, including the exemplary methods shown in Figures 9-12, 14, and 17.

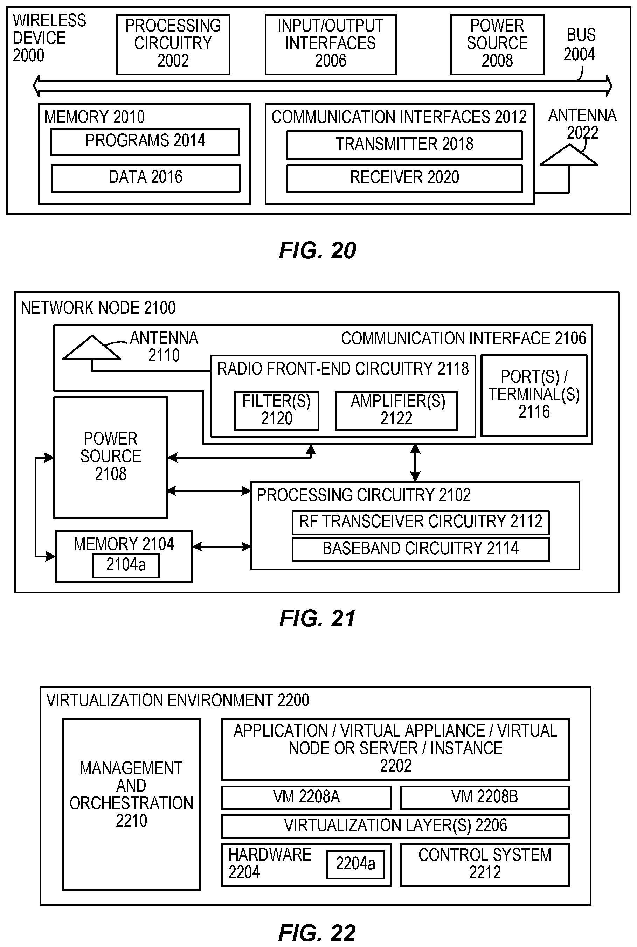

Figure 20 shows an example wireless device 2000 according to some embodiments. Wireless device 2000 may represent any of various examples including, but not limited to, smart phones, mobile phones, cellular phones, voice over IP (VoIP) phones, wireless local loop phones, desktop computers, personal digital assistants (PDAs), wireless cameras, gaming consoles or devices, music storage devices, playback appliances, wearable devices, wireless endpoints, mobile stations, tablets, laptops, laptop-embedded equipment (LEE), laptop-mounted equipment (LME), smart devices, wireless customer-premise equipment (CPE), vehicles, vehicle-mounted or vehicle embedded/integrated wireless devices, etc. Other examples include any user equipment (UE) identified by 3GPP, including a narrow band internet of things (NB-IoT) UE, a machine type communication (MTC) UE, and/or an enhanced MTC (eMTC) UE.

A wireless device may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a wireless device may not necessarily have a user in the sense of a human user who owns and/or operates the relevant device. Instead, a wireless device may represent a device that is intended for sale to, or operation by, a human user but which may not, or which may not initially, be associated with a specific human user (e.g., a smart sprinkler controller). Alternatively, a wireless device may represent a device that is not intended for sale to, or operation by, an end user but which may be associated with or operated for the benefit of a user (e.g., a smart power meter).

Wireless device 2000 includes processing circuitry 2002 that is operatively coupled via a bus 2004 to an input/output interface 2006, a power source 2008, a memory 2010, a communication interface 2012, and/or one or more other components not explicitly shown. Moreover, certain wireless devices may utilize all or a subset of the components shown in Figure 20. The level of integration between the components may vary from one wireless device to another wireless device, and one or more of the components explicitly shown in Figure 20 may be integrated wholly or partially with other components not explicitly shown. Further, certain wireless devices may contain multiple instances of a particular component (e.g., processors, memories, transceivers, transmitters, receivers, etc.).

Processing circuitry 2002 is configured to process instructions and data and may be configured to implement any sequential state machine operative to execute instructions stored as machine-readable computer programs in memory 2010. Processing circuitry 2002 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, processing circuitry 2002 may include multiple central processing units (CPUs).

In the example shown in Figure 20, input/output interface 2006 may be configured to provide interface(s) to input device(s), output device(s), or some combination thereof. Example output devices include speakers, sound cards, video cards, displays, monitors, printers, actuators, emitters, smartcards, etc., or some combination thereof. Example input devices include a touch-(or presence-) sensitive displays, cameras (e.g., digital camera, video camera, web camera, etc.), microphones, sensors, mice, trackballs, directional pads, trackpads, scroll wheels, smartcards, etc., or some combination thereof.

As a more specific example, presence-sensitive displays may include a capacitive or resistive touch sensor to sense input from a user. As other more specific examples, sensors may include an accelerometer, a gyroscope, a tilt sensor, a force sensor, a magnetometer, an optical sensor, a proximity sensor, a biometric sensor, etc., or some combination thereof. In some variants, an output device may use the same interface port (or same port type) as an input device. As an example of these variants, a Universal Serial Bus (USB) port may be used as an input device and an output device.

In some embodiments, power source 2008 is structured as a battery or battery pack. Other types of power sources, such as an external power source (e.g., an electricity outlet), photovoltaic device, or power cell, may be used. Power source 2008 may further include power circuitry for delivering power from power source 2008 itself, and/or an external power source, to the various parts of wireless device 2000 via input circuitry or an interface such as an electrical power cable. Power circuitry may perform any formatting, converting, or other modification to the power from power source 2008 to make the power suitable for the respective components of wireless device 2000 to which power is supplied.

Memory 2010 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, memory 2010 includes one or more programs 2014, such as an operating system, web browser application, widgets, a gadget engine, etc. and corresponding data 2016. Memory 2010 may store, for use by wireless device 2000, one or more specific operating systems or combinations thereof.

Memory 2010 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' Memory 2010 may allow wireless device 2000 to access instructions, application programs and the like, stored on transitory or non-transitory memory media, to off-load data, or to upload data. An article of manufacture, such as one utilizing a communication system may be tangibly embodied as or in memory 2010, which may be or comprise a device-readable storage medium.

Processing circuitry 2002 may be configured to communicate with an access network or other network using communication interface 2012. Communication interface 2012 may comprise one or more communication subsystems and may include or be communicatively coupled to an antenna 2022. Communication interface 2012 may include one or more transceivers used to communicate, such as by communicating with one or more remote transceivers of another device capable of wireless communication (e.g., another wireless device or a network node in an access network). Each transceiver may include a transmitter 2018 and/or a receiver 2020 appropriate to provide network communications (e.g., optical, electrical, frequency allocations, and so forth). Moreover, transmitter 2018 and receiver 2020 may be coupled to one or more antennas (e.g., antenna 2022) and may share circuit components, software, or firmware, or alternatively be implemented separately.

In the example shown in Figure 20, communication interface 2012 may support and/or provide cellular communication, Wi-Fi communication, LPWAN communication, data communication, voice communication, multimedia communication, short-range communication (e.g., Bluetooth, near-field communication), location-based communication (e.g., use of the global navigation satellite system, GNSS, to determine location), etc., or any combination thereof. Communications may be implemented according to one or more protocols and/or standards, such as IEEE 802.11, Code Division Multiplexing Access (CDMA), Wideband Code Division Multiple Access (WCDMA), orthogonal frequency division multiplexing or multiple access (OFDM/OFDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

In some embodiments, wireless device 2000 may output data captured by its sensors through its communication interface 2012 to a network node via a wireless connection, such as shown in Figures 18-19. In some variants, the wireless connection may be through another wireless device of similar or different type. Output of the captured sensor data may be periodic (e.g., once every 15 minutes if it reports the sensed temperature), random (e.g., to even out the load from reporting from several sensors), in response to a triggering event (e.g., an alert is sent when moisture is detected), in response to a request (e.g., a user initiated request), or a continuous stream (e.g., a live video feed of a patient).

In some embodiments, wireless device 2000 may include an actuator, a motor, or a switch related to a communication interface configured to receive wireless input from a network node via a wireless connection. In some variants, the states of the actuator, motor, or switch may change in response to the received wireless input. For example, the UE may include a motor that adjusts control surfaces or rotors of a unmanned aerial vehicle (UAV, e.g., drone) in flight according to the received input, or adjusts a robotic arm performing a medical procedure according to the received input.

When in the form of an Internet of Things (IoT) device, wireless device 2000 may be used in one or more application domains such as wearable technology, extended industrial application, and healthcare. As some non-limiting example, such an IoT device may include (or be embedded in) a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, a UAV, and a medical device (e.g., heart rate monitor, remote controlled surgical robot, etc.). When arranged as an IoT device, wireless device 2000 may include circuitry and/or software associated with its intended application as well as other components such as described above for more generic embodiments of wireless device 2000.

As another example IoT-related application, wireless device 2000 may include (or be embedded in) a machine or other device that performs monitoring and/or measurements, and transmits the results of such monitoring and/or measurements to other wireless devices and/or to network nodes in a communication network. As a more specific example, wireless device 300 may be an M2M device, which may also be referred to as a machine-type communication (MTC) device in 3GPP vocabulary. Such an M2M device may implement the 3GPP NB-IoT standard. As another example IoT-related application, wireless device 2000 may be embedded in a vehicle (e.g., passenger car, motorcycle, bus, truck, ship, airplane, etc.) or in other equipment that is capable of monitoring and/or reporting on its operational status or other functions associated with its operation.

In practice, any number of wireless devices (e.g., 2000) may be used together in a single use case. For example, a first wireless device may be or be integrated in a UAV and provide the UAV's speed information (e.g., obtained through a speed sensor) to a second wireless device that is a remote controller operating the UAV. When the user makes changes from the remote controller, the first wireless device may adjust the throttle on the UAV (e.g., by controlling an actuator) to increase or decrease the UAV's speed. The first and/or the second wireless devices may include more than the specific functionalities described above. For example, a wireless device may include a sensor and an actuator, and handle communication of data for both the sensor and the actuator.

In some embodiments, wireless device 2000 may be configured to perform operations attributed to a UE in various methods or procedures described above, including the exemplary methods shown in Figures 9-12, 14, and 16.

Figure 21 shows an example network node 2100 according to some embodiments. Examples of network nodes include, but are not limited to, access points (APs) (e.g., radio access points), base stations (e.g., radio base stations, Node Bs, eNBs, gNBs), and O-RAN nodes or components of an O-RAN node (e.g., O-RU, O-DU, O-CU). Network node 2100 may be considered as a type of network equipment (in contrast to user equipment, UE).

Network nodes may be categorized based on the amount of coverage they provide (or, stated differently, their transmit power level) and so, depending on the provided amount of coverage, may be referred to as femto base stations, pico base stations, micro base stations, or macro base stations. Network node 2100 may be a relay node or a relay donor node controlling a relay. Network node 2100 may include one or more (or all) parts of a distributed radio base station such as centralized digital units, distributed units (e.g., in an O-RAN access node) and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes (such as 2100) include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

Network node 2100 includes processing circuitry 2102, memory 2104, communication interface 2106, and power source 2108. Network node 2100 may be composed of multiple physically separate components (e.g., a NodeB component and a RNC component, or a BTS component and a BSC component, etc.), which may each have their own respective components. For example, the specific components shown in Figure 21 may represent or include physical components common to or shared by one or more of the other elements of network node 2100.

In certain scenarios in which network node 2100 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, network node 2100 may be configured to support multiple radio access technologies (RATs). In such embodiments, some components may be duplicated (e.g., separate memories 2104 for different RATs) and some components may be reused (e.g., one antenna 2110 may be shared by different RATs). Network node 2100 may also include multiple sets of the various illustrated components for different wireless technologies integrated into network node 2100, e.g., GSM, WCDMA, LTE, NR, WiFi, Zigbee, Z-wave, LoRaWAN, Radio Frequency Identification (RFID), Bluetooth, etc. These wireless technologies may be integrated into the same or different chip or set of chips and other components within network node 2100.

Processing circuitry 2102 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other components (e.g., memory 2104) to provide the functionality of network node 2100.

In some embodiments, processing circuitry 2102 may include a system on a chip (SOC). In some embodiments, processing circuitry 2102 includes radio frequency (RF) transceiver circuitry 2112 and/or baseband processing circuitry 2114. In some embodiments, RF transceiver circuitry 2112 and/or baseband processing circuitry 2114 may be on separate chips (or sets of chips), boards, or units, such as radio units and digital units. In alternative embodiments, part or all of RF transceiver circuitry 2112 and/or baseband processing circuitry 2114 may be on the same chip or set of chips, boards, or units.

Memory 2104 may include any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by processing circuitry 2102. Memory 2104 may store any suitable instructions, data, or information, including a computer program, software, an application including one or more of logic, rules, code, tables, and/or other instructions (collectively denoted computer program 2104A, which may be in the form of a computer program product) capable of being executed by processing circuitry 2102 and utilized by network node 2100. Memory 2104 may be used to store any calculations made by processing circuitry 2102 and/or any data received via communication interface 2106. In some embodiments, processing circuitry 2102 and memory 2104 is integrated.

Communication interface 2106 may be used for wired or wireless communication of signaling and/or data between network node 2100, an access network, a core network, and/or wireless device(s). As illustrated, communication interface 2106 comprises port(s)/terminal(s) 2116 to send and receive data, for example to and from a network over a wired connection. Communication interface 2106 also includes radio front-end circuitry 2118 that may be coupled to, or in certain embodiments a part of, antenna 2110. Radio front-end circuitry 2118 comprises filters 2120 and amplifiers 2122. Radio front-end circuitry 2118 may be connected to an antenna 2110 and processing circuitry 2102. The radio front-end circuitry may be configured to condition signals communicated between antenna 2110 and processing circuitry 2102. Radio front-end circuitry 2118 may receive digital data that is to be sent out to other network nodes or wireless devices via a wireless connection. Radio front-end circuitry 2118 may convert the digital data into a radio signal having the appropriate channel and bandwidth parameters using a combination of filters 2120 and/or amplifiers 2122. The radio signal may then be transmitted via antenna 2110. Similarly, when receiving data, antenna 2110 may collect radio signals which are then converted into digital data by radio front-end circuitry 2118. The digital data may be passed to processing circuitry 2102. In other embodiments, the communication interface may comprise different components and/or different combinations of components.

In certain alternative embodiments, network node 2100 does not include separate radio front-end circuitry 2118, instead, processing circuitry 2102 includes radio front-end circuitry and is connected to antenna 2110. Similarly, in some embodiments, all or some of RF transceiver circuitry 2112 is part of communication interface 2106. In still other embodiments, communication interface 2106 includes one or more ports or terminals 2116, radio front-end circuitry 2118, and RF transceiver circuitry 2112, as part of a radio unit (not shown), and communication interface 2106 communicates with baseband processing circuitry 2114, which is part of a digital unit (not shown).

Antenna 2110 may include one or more antennas, or antenna arrays, configured to send and/or receive wireless signals. Antenna 2110 may be coupled to radio front-end circuitry 2118 and may be any type of antenna capable of transmitting and receiving data and/or signals wirelessly. In certain embodiments, antenna 2110 is separate from network node 2100 and connectable to network node 2100 through one or more interfaces or ports.

Antenna 2110, communication interface 2106, and/or processing circuitry 2102 may be configured to perform various receiving and/or obtaining operations described herein as being performed by a network node. Any information, data and/or signals may be received from a wireless device, another network node, and/or any other network equipment. Similarly, antenna 2110, communication interface 2106, and/or processing circuitry 2102 may be configured to perform any transmitting operations described herein as being performed by a network node. Any information, data and/or signals may be transmitted to a wireless device, another network node, and/or any other network equipment.

Power source 2108 provides power to the various components of network node 2100 in a form suitable for the respective components (e.g., at a voltage and current level needed for each respective component). Power source 2108 may further comprise, or be coupled to, power management circuitry to supply the components of network node 2100 with power for performing the functionality described herein. For example, network node 2100 may be connectable to an external power source (e.g., generator, power grid, electrical outlet, etc.) via an input circuitry or interface such as an electrical cable, whereby the external power source supplies power to power circuitry of power source 2108. As another example, power source 2108 may include a battery or battery pack that is connected to, or integrated with, power circuitry. Such a battery or battery pack may provide backup power should the external power source fail.

Embodiments of network node 2100 may include additional components beyond those shown in Figure 21 for providing certain aspects of the network node's functionality, including any of the functionality described herein and/or any functionality necessary to support the subject matter described herein. For example, network node 2100 may include user interface equipment to allow input of information into network node 2100 and to allow output of information from network node 2100. This may allow a user to perform diagnostic, maintenance, repair, and other administrative functions for network node 2100.

In some embodiments, network node 2100 may be configured to perform operations attributed to an NF of a UE's HN in various methods or procedures described above, including the exemplary methods shown in Figures 9-12 and 14-15. In some embodiments, network node 1800 may be configured to perform operations attributed to an NF of a UE's SN in various methods or procedures described above, including the exemplary methods shown in Figures 9-12, 14, and 17. In other words, network node 2100 may be configured to implement NFs of the UE's HN and/or SN.

Figure 22 shows an example virtualization environment 2200 in which some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 2200 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized. In some embodiments, the virtualization environment 2200 includes components defined by the O-RAN Alliance, such as an O-Cloud environment orchestrated by a Service Management and Orchestration Framework via an O-2 interface.

Applications 2202 (which may alternatively be called software instances, virtual appliances, network functions, virtual nodes, virtual network functions, etc.) are run in the virtualization environment 2200 to implement some of the features, functions, and/or benefits of some of the embodiments disclosed herein. For example, one or more virtual nodes 2202 may be configured to perform operations attributed to an NF of a UE's HN in various methods or procedures described above, including the exemplary methods shown in Figures 9-12 and 14-15. As another example, one or more virtual nodes 2202 may be configured to perform operations attributed to an NF of a UE's SN in various methods or procedures described above, including the exemplary methods shown in Figures 9-12, 14, and 17. In other words, virtualization environment 2200 may be configured to implement NFs of the UE's HN and/or SN.

Hardware 2204 may include processing circuitry, memory that stores software and/or instructions (collectively denoted computer program 2204A, which may be in the form of a computer program product) executable by the processing circuitry, and other hardware devices such as a network interface, input/output interface, etc. Software may be executed by the processing circuitry to instantiate one or more virtualization layers 2206 (also referred to as hypervisors or virtual machine monitors (VMMs)), provide VMs 2208A-B (one or more of which may be generally referred to as VMs 2208), and/or perform any of the functions, features and/or benefits described in relation with some embodiments described herein. Virtualization layer 2206 may present a virtual operating platform that appears like networking hardware to the VMs 2208.

VMs 2208 may include virtual processing resources, virtual memory and/or storage, virtual networking and/or communication interfaces, etc., and may be run by a corresponding virtualization layer 2206. Different instances of a virtual appliance 2202 may be implemented on one or more VMs 2208, in various ways. In this context, hardware virtualization may also be referred to as network function virtualization (NFV), which may be used to consolidate many network equipment types onto commercial off-the-shelf (COTS) hardware such as server hardware, physical switches, physical storage, etc.. Such equipment may be located in data centers, customer premises, etc.

In the context of NFV, each VM 2208 may be a software implementation of a physical machine that runs programs as if they were executing on a physical, non-virtualized machine. Each VM 2208, and that part of hardware 2204 which executes the particular VM (e.g., VM-dedicated hardware or hardware shared with other VMs), forms a separate virtual network element. Further in the context of NFV, a virtual network function (NF) may be responsible for handling specific NFs that run in one or more VMs 2208 on top of hardware 2204 and that corresponds to a particular application 2202.

Hardware 2204 may be implemented in a standalone network node with generic or specific components. Hardware 2204 may implement some functions via virtualization. Alternatively, hardware 2204 may be part of a larger cluster of hardware (e.g., in a data center or customer premises) where many hardware nodes are managed cooperatively by a management and orchestration function 2210, which may oversee lifecycle management (LCM) of applications 2202. In some embodiments, hardware 2204 may be coupled to one or more radio units, each of which may include one or more transmitters and/or one or more receivers and may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 2212 which may alternatively be used for communication between hardware nodes and radio units.

The foregoing merely illustrates the principles of the disclosure. Various modifications and alterations to the described embodiments will be apparent to those skilled in the art in view of the teachings herein. It will thus be appreciated that those skilled in the art will be able to devise numerous systems, arrangements, and procedures that, although not explicitly shown or described herein, embody the principles of the disclosure and can be thus within the spirit and scope of the disclosure. Various embodiments can be used together with one another, as well as interchangeably therewith, as should be understood by those having ordinary skill in the art.

The term unit, as used herein, can have conventional meaning in the field of electronics, electrical devices and/or electronic devices and can include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In addition, certain terms used in the present disclosure, including the specification and drawings, may be used synonymously in certain instances (e.g., "data" and "information"). It should be understood that although such terms may be used synonymously herein, there may be instances when such terms are not intended to be used synonymously.

Embodiments of the techniques and apparatus described herein also include, but are not limited to, the following enumerated examples:
A1. A method performed by a home environment anchor function (HEAF) of a home network (HN) for a user equipment (UE) configured to operate in a serving network (SN), the method comprising first operations and/or second operations, wherein:
   the first operations include the following:
      receiving the following from a network function (NF) of the HN: a first message to the UE from the NF of the HN, and an identifier of the UE;
      encrypting and integrity protecting the first message based on a home access stratum (HAS) security context associated with the UE, thereby obtaining a first HAS message; and
      sending, to an NF of the SN, a request that includes the following: the first HAS message, and the identifier of the UE; and
   the second operations include the following:
      receiving, from the NF of the SN, a second request that includes the following: the identifier of the UE, and a second HAS message that includes a second message from the UE to the NF of the HN;
      decrypting and verifying integrity of the second HAS message based on the HAS security context associated with the UE, thereby obtaining the second message; and
      sending the following to the NF of the HN: the second message, and the identifier of the UE.
   wherein the HAS security context is based on a security key (K_{AUSF}) associated with an authentication server function (AUSF) of the HN.
A2. The method of embodiment A1, further comprising, based on the identifier of the UE received from the NF of the HN or from the NF of the SN, obtaining the HAS security context associated with the UE.
A3. The method of any of embodiments A1-A2, wherein the HAS security context includes a key (K_{HEAF}) derived from K_{AUSF} and one of the following derived from K_{HEAF}: a first key for HAS encryption and a second key for HAS integrity protection, or a third key for HAS encryption and integrity protection.
A3a. The method of embodiment A3, wherein one or more of the following applies:
   encrypting the first message and decrypting the second HAS message is based on the first key or the third key; and
   integrity protecting the first message and verifying integrity of the second HAS message is based on the second key or the third key.
A4. The method of any of embodiments A1-A3a, wherein the first operations also include the following:
   receiving, from the NF of the SN, a response that includes the following: a third HAS message that includes a response to the first message from the NF of HN, and the identifier of the UE; and
   decrypting and verifying integrity of the third HAS message based on the HAS security context associated with the UE, thereby obtaining the response to the first message; and
   sending the response to the first message to the NF of the HN.
A4a. The method of any of embodiments A1-A4, wherein the second operations also include the following:
   receiving, from the NF of the HN, a second response that includes the following: a response to the second message from the UE, and the identifier of the UE;
   encrypting and integrity protecting the second response based on the HAS security context associated with the UE, thereby obtaining a fourth HAS message; and
   sending the fourth HAS message to the NF of the SN.
A5. The method of any of embodiments A1-A4a, wherein one or more of the following applies: the HEAF is a centralized function of the HN, and the HEAF facilitates communication by all NFs of the HN with UEs in SNs.
A6. The method of any of embodiments A1-A4a, wherein one or more of the following applies: the HEAF is a distributed function of the HN, and the HEAF facilitates communication by one of the following with UEs in SNs: a particular NF, a particular type of NF, or a particular set of NFs of a single type.
A7. The method of any of embodiments A1-A4, wherein one or more of the following applies: the NF of the SN is an access and mobility management function (AMF), and the HEAF is the AUSF or included in the AUSF
A8. The method of any of embodiments A1-A5, wherein one of the following applies: the SN is different from the HN, or the SN is the HN.
B1. A method performed by a user equipment (UE) configured with a home network (HN) and to operate in a serving network (SN), wherein the method comprises first operations and/or second operations, wherein:
   the first operations include the following:
      receiving, from a network function (NF) of the SN, a first home access stratum (HAS) message from a home environment anchor function (HEAF) of the HN, wherein the first HAS message includes a first message from an NF of the HN; and
      decrypting and verifying integrity of the first HAS message based on a HAS security context associated with the UE, thereby obtaining the first message from the NF of the HN; and
   the second operations include the following:
      based on the HAS security context associated with the UE, encrypting and integrity protecting a second message from the UE to the NF of the HN, thereby obtaining a second HAS message for the HEAF; and
      sending the second HAS message to the NF of the SN,
   wherein the HAS security context is based on a security key (K_{AUSF}) associated with an authentication server function (AUSF) of the HN.
B2. The method of embodiment B1, wherein one or more of the following applies:
   the first HAS message is received in a first non-access stratum (NAS) message from the NF of the SN; and
   the second HAS message is sent in a second NAS message to the NF of the SN.
B2a. The method of embodiment B2, wherein the first NAS message is encrypted and integrity protected based on a NAS security context associated with the UE, and the first operations also include decrypting and verifying integrity of the first NAS message based on the NAS security context associated with the UE, thereby obtaining the first HAS message.
B2b. The method of embodiment B2, wherein the second operations also include encrypting and integrity protecting the second HAS message based on a NAS security context associated with the UE, thereby obtaining the second NAS message.
B3. The method of any of embodiments B1-B2b, wherein the HAS security context includes a key (K_{HEAF}) derived from K_{AUSF} and one of the following derived from K_{HEAF}: a first key for HAS encryption and a second key for HAS integrity protection, or a third key for HAS encryption and integrity protection.
B3a. The method of embodiment B3, wherein one or more of the following applies:
   encrypting the second message and decrypting the first HAS message is based on the first key or the third key; and
   integrity protecting the second message and verifying integrity of the first HAS message is based on the second key or the third key.
B4. The method of any of embodiments B1-B3a, wherein the first operations also include the following:
   based on the HAS security context associated with the UE, encrypting and integrity protecting a first response to the first message from the NF of the HN, thereby obtaining a third HAS message; and
   sending the third HAS message to the NF of the SN.
B4a. The method of embodiment B4, wherein the first operations also include encrypting and integrity protecting the third HAS message based on a NAS security context associated with the UE, thereby obtaining a third NAS message in which the third HAS message is sent to the NF of the SN.
B5. The method of any of embodiments B1-B4a, wherein the second operations also include the following:
   receiving, from the NF of the SN, a fourth HAS message that include a response to the second message from the UE; and
   decrypting and verifying integrity of the fourth HAS message based on the HAS security context associated with the UE, thereby obtaining the response to the second message from the UE.
B5a. The method of embodiment B5, wherein the fourth HAS message is received from the NF of the SN in a fourth NAS message, and the second operations also include decrypting and verifying integrity of the fourth NAS message based on a NAS security context associated with the UE, thereby obtaining the fourth HAS message.
B6. The method of any of embodiments B1-B4a, one or more of the following applies: the HEAF is a centralized function of the HN, and the HEAF facilitates communication between the UE of the SN and all NFs of the HN.
B7. The method of any of embodiments B1-B4a, wherein one or more of the following applies: the HEAF is a distributed function of the HN, and the HEAF facilitates communication between the UE of the SN and one of the following: a particular NF, a particular type of NF, or a particular set of NFs of a single type.
B8. The method of any of embodiments B1-B7, wherein one or more of the following applies: the NF of the SN is an access and mobility management function (AMF), and the HEAF is the AUSF or included in the AUSF
B9. The method of any of embodiments B1-B8, wherein one of the following applies: the SN is different from the HN, or the SN is the HN.
C1. A method performed by a network function (NF) of a serving network (SN) for a user equipment (UE) configured with a home network (HN), the method comprising first operations and/or second operations, wherein:
   the first operations include the following:
      receiving, from a home environment anchor function (HEAF) of the HN, a request that includes the following: an identifier of the UE, and a first home access stratum (HAS) message that includes a first message to the UE from an NF of the HN; and
      sending the first HAS message to the UE; and
   the second operations include the following:
      receiving, from the UE, a second HAS message for the HEAF, wherein the second HAS message includes a second message from the UE to the NF of the HN; and
      sending the second HAS message to the HEAF.
C2. The method of embodiments C1, wherein one or more of the following applies:
   the first HAS message is sent to the UE in a first non-access stratum (NAS) message; and
   the second HAS message is received from the UE in a second NAS message.
C2a. The method of embodiment C2, wherein the first operations also include encrypting and integrity protecting the first HAS message based on a NAS security context associated with the UE, thereby obtaining the first NAS message.
C2b. The method of any of embodiments C2-C2a, wherein the second operations also include decrypting and verifying integrity of the second NAS message based on a NAS security context associated with the UE, thereby obtaining the second HAS message.
C3. The method of any of embodiments C1-C2b, wherein the UE and the HEAF are associated with a HAS security context that includes the following:
   a key (K_{HEAF}) derived from a security key (K_{AUSF}) associated with an authentication server function (AUSF) of the HN; and
   one of the following derived from K_{HEAF}: a first key for HAS encryption and a second key for HAS integrity protection, or a third key for HAS encryption and integrity protection.
C3a. The method of embodiment C3, wherein one or more of the following applies:
   the first HAS message and the second HAS message are encrypted based on the first key or the third key; and
   the first HAS message and the second HAS message are integrity protected based on the second key of the third key.
C4. The method of any of embodiments C1-C2a, wherein the first operations also include the following:
   receiving from the UE a third HAS message that includes a first response to the first message from the NF of the HN; and
   sending the third HAS message to the HEAF.
C4a. The method of embodiment C3, wherein the third HAS message is received from the UE in a third non-access stratum (NAS) message and the first operations also include decrypting and verifying integrity of the third NAS message based on a NAS security context associated with the UE, thereby obtaining the third HAS message.
C5. The method of any of embodiments C1-C4a, wherein the second operations also include the following:
   receiving, from the HEAF, a fourth HAS message that includes a second response to the second message from the UE; and
   sending the fourth HAS message to the UE.
C5a. The method of embodiment C4, wherein the fourth HAS message is sent to the UE in a fourth non-access stratum (NAS) message and the second operations also include encrypting and integrity protecting the fourth HAS message based on a NAS security context associated with the UE, thereby obtaining the fourth NAS message.
C6. The method of any of embodiments C1-C5a, wherein one or more of the following applies: the HEAF is a centralized function of the HN, and the HEAF facilitates communication between the UE of the SN and all NFs of the HN.
C7. The method of any of embodiments C1-C5a, wherein one or more of the following applies: the HEAF is a distributed function of the HN, and the HEAF facilitates communication between the UE of the SN and one of the following: a particular NF, a particular type of NF, or a particular set of NFs of a single type.
C8. The method of any of embodiments C1-C7, wherein one or more of the following applies: the NF of the SN is an access and mobility management function (AMF), and the home environment anchor function (HEAF) is an authentication server function (AUSF) or included in the AUSF.
C9. The method of any of embodiments C1-C8, wherein one of the following applies: the SN is different from the HN, or the SN is the HN.
[700] D1. A method performed by a home environment anchor function (HEAF) of a home network (HN) for a user equipment (UE) configured to operate in a serving network (SN), the method comprising:
   receiving a first request for establishment of a home access stratum (HAS) for communication between a network function (NF) of the HN and the UE of the SN, wherein the first request includes an identifier of the UE;
   sending, to an NF of the SN, a second request that includes the following: the identifier of the UE, and a HAS security mode command (SMC) that indicates security algorithms to be used by the UE for HAS security; and
   receiving, from the NF of the SN, a second response that includes a HAS SMC complete message from the UE, wherein the HAS SMC complete message is encrypted and integrity protected based on the indicated security algorithms.
D2. The method of embodiment D1, further comprising:
   in response to the first request, sending to an authentication server function (AUSF) of the HN a further request for a key (K_{HEAF}) to be used as basis for HAS security; and
   receiving the following information from the AUSF in response to the further request: K_{HEAF}, and the UE's security capabilities structure
D2a. The method of embodiment D2, further comprising performing one or more of the following operations based on the information received from the AUSF:
   selecting, from the UE's security capabilities structure, the security algorithms to be used by the UE for HAS security; and
   computing one of the following based on K_{HEAF}: a first key for HAS encryption and a second key for HAS integrity protection, or a third key for HAS encryption and integrity protection.
D2b. The method of embodiment D2a, wherein the HAS SMC complete message in the second response is encrypted and integrity protected, and the method further comprises decrypting the HAS SMC complete message using the first key or the third key and verifying integrity of the HAS SMC complete message using the second key or the third key.
D2c. The method of any of embodiments D2-D2b, wherein the HAS SMC complete message includes the UE's security capabilities structure and the method further comprises verifying the UE's security capabilities structure received from the AUSF of the HN against the UE's security capabilities structure included in the HAS SMC complete message.
D3. The method of any of embodiments D1-D2c, further comprising:
   in response to the first request, sending to a unified data management function (UDM) of the HN a query for information about the UE's SN, wherein the query includes the identifier of the UE; and
   receiving the following information from the UDM in response to the query: an identifier of the SN, and an identifier of the NF of the SN,
   wherein the second request is sent based on the information received from the UDM.
D4. The method of any of embodiments D1-D3, wherein the first request is received from the NF of the HN, and the first request includes a message for the UE.
D5. The method of any of embodiments D1-D3, wherein the first request is received from the NF of the SN, and the first request includes a HAS initialization trigger message.
D6. The method of any of embodiments D1-D5, wherein one or more of the following applies: the HEAF is a centralized function of the HN, and the HEAF facilitates communication by all NFs of the HN with UEs in SNs.
D7. The method of any of embodiments D1-D5, wherein one or more of the following applies: the HEAF is a distributed function of the HN, and the HEAF facilitates communication by one of the following with UEs in SNs: a particular NF, a particular type of NF, or a particular set of NFs of a single type.
D8. The method of any of embodiments D1-D7, wherein one or more of the following applies: the NF of the SN is an access and mobility management function (AMF), and the home environment anchor function (HEAF) is an authentication server function (AUSF) or included in the AUSF
D9. The method of any of embodiments D1-D8, wherein one of the following applies: the SN is different from the HN, or the SN is the HN.
E1. A method performed by a user equipment (UE) configured with a home network (HN) and to operate in a serving network (SN), the method comprising:
   receiving, from network function (NF) of the SN, a home access stratum (HAS) security mode command (SMC) from a home environment anchor function (HEAF) of the HN, wherein the HAS SMC indicates security algorithms to be used for communication between the UE and the HEAF;
   based on the HAS SMC, deriving a key (K_{HEAF}) associated with the HEAF and one of the following based on K_{HEAF}: a first key for HAS encryption and a second key for HAS integrity protection, or a third key for HAS encryption and integrity protection; and
   based on verifying integrity of the HAS SMC using the indicated security algorithms and the second or third key, sending to the NF of the SN a HAS SMC complete message for the HEAF, wherein the HAS SMC complete message is encrypted and integrity protected based on the indicated security algorithms.
E2. The method of embodiment E1, further comprising encrypting the HAS SMC complete message using the first key or the third key and integrity protecting the HAS SMC complete message using the second key or the third key.
E3. The method of any of embodiments E1-E2, further comprising sending, to the NF of the SN, a HAS initialization trigger message for the HEAF, wherein the HAS SMC is received from the NF of the SN in response to the HAS initialization trigger message.
E3a. The method of embodiment E3, wherein the HAS initialization trigger message is sent to the NF of the SN in a third non-access stratum (NAS) message.
E4. The method of any of embodiments E1-E3, wherein:
   the method further comprises, prior to sending the HAS SMC complete NAS message, verifying that the indicated security algorithms are consistent with the UE's security capabilities structure; and
   the HAS SMC complete message includes the UE's security capabilities structure.
E5. The method of any of embodiments E1-E4, wherein the HAS SMC is received in a first non-access stratum (NAS) message from the NF of the SN, and the HAS SMC complete message is sent in a second NAS message to the NF of the SN.
E5a. The method of embodiment E5, further comprising, prior to receiving the first NAS message, establishing a NAS security context with the NF of the SN.
E5b. The method of embodiment E5a, further comprising decrypting and verifying integrity of the first NAS message using the established NAS security context, thereby obtaining the HAS SMC.
E5c. The method of any of embodiments E5a-E5b, further comprising encrypting and integrity protecting the HAS SMC complete message using the established NAS security context, thereby obtaining the second NAS message.
E6. The method of any of embodiments E1-E5c, wherein one or more of the following applies: the HEAF is a centralized function of the HN, and the HEAF facilitates communication between the UE of the SN and all NFs of the HN.
E7. The method of any of embodiments E1-E5c, wherein one or more of the following applies: the HEAF is a distributed function of the HN, and the HEAF facilitates communication between the UE of the SN and one of the following: a particular NF, a particular type of NF, or a particular set of NFs of a single type.
E8. The method of any of embodiments E1-E7, wherein one or more of the following applies: the NF of the SN is an access and mobility management function (AMF), and the home environment anchor function (HEAF) is an authentication server function (AUSF) or included in the AUSF
E9. The method of any of embodiments E1-E8, wherein one of the following applies: the SN is different from the HN, or the SN is the HN.
F1. A method performed by a network function (NF) of a serving network (SN) for a user equipment (UE) configured with a home network (HN), the method comprising:
   receiving, from a home environment anchor function (HEAF) of the HN, a request that includes the following:
      an identifier of the UE, and
      a home access stratum (HAS) security mode command (SMC) that indicates security algorithms to be used for communication between the UE and the HEAF;
   sending the HAS SMC to the UE;
   receiving from the UE a HAS SMC complete message for the HEAF, wherein the HAS SMC complete message is encrypted and integrity protected based on the indicated security algorithms;
   sending to the HEAF a response that includes the HAS SMC complete message.
F2. The method of embodiment F1, wherein the HAS SMC is sent to the UE in a first non-access stratum (NAS) message, and the HAS SMC complete message is received from the UE in a second NAS message.
F2a. The method of embodiment F2, further comprising, prior to receiving the request, establishing a non-access stratum (NAS) security context for communication with the UE.
F2b. The method of embodiment F2a, further comprising encrypting and integrity protecting the first NAS message using the established NAS security context.
F2c. The method of any of embodiments F2a-F2b, further comprising decrypting and verifying integrity of the second NAS message using the established NAS security context.
F3. The method of any of embodiments F1-F2c, further comprising:
   receiving from the UE a HAS initialization trigger message for the HEAF; and
   sending to the HEAF a further request that includes the following: the identifier of the UE, and the HAS initialization trigger message,
   wherein the request is received from the HEAF in response to the further request.
F3a. The method of embodiment F3, wherein the HAS initialization trigger message is received from the UE in a third non-access stratum (NAS) message.
F3b. The method of embodiment F3a, further comprising decrypting and verifying integrity of the third NAS message using a NAS security context established between the UE and the NF of the SN, thereby obtaining the HAS initialization trigger message.
F4. The method of any of embodiments F1-F3b, wherein the HAS SMC complete message includes the UE's security capabilities structure.
F5. The method of any of embodiments F1-F4, wherein one or more of the following applies: the HEAF is a centralized function of the HN, and the HEAF facilitates communication between the UE of the SN and all NFs of the HN.
F6. The method of any of embodiments F1-F4, wherein one or more of the following applies: the HEAF is a distributed function of the HN, and the HEAF facilitates communication between the UE of the SN and one of the following: a particular NF, a particular type of NF, or a particular set of NFs of a single type.
F7. The method of any of embodiments F1-F6, wherein one or more of the following applies: the NF of the SN is an access and mobility management function (AMF), and the home environment anchor function (HEAF) is an authentication server function (AUSF) or included in the AUSF
F8. The method of any of embodiments F1-F7, wherein one of the following applies: the SN is different from the HN, or the SN is the HN.
[701] G1. A method performed by a first network function (NF) of a home network (HN) for a user equipment (UE) configured to operate in a serving network (SN), wherein the method comprises first operations and/or second operations, wherein:
   the first operations include the following:
      receiving, from a second NF of the HN, a first message to the UE;
      integrity protecting the first message based on a home access stratum (HAS) security context associated with the UE, thereby obtaining a first HAS message; and
      sending the first HAS message to an NF of the SN; and
   the second operations include the following:
      receiving, from the NF of the SN, a second HAS message that includes a second message from the UE to the second NF of the HN;
      verifying integrity of the second HAS message based on the HAS security context associated with the UE, thereby obtaining the second message; and
      sending the second message to the second NF of the HN,
   wherein the HAS security context is based on the following:
      a security key (K_{AUSF}) associated with an authentication server function (AUSF) of the HN, and/or
      a security key (K_{SEAF}) associated with a security anchor function (SEAF) of the SN.
G1a. The method of embodiment G1, wherein:
   the first operations for obtaining the first HAS message includes: encrypting and integrity protecting the first message based on a home access stratum (HAS) security context associated with the UE, thereby obtaining a first HAS message; and/or
   the second operations for obtaining the second HAS message includes: decrypting and verifying integrity of the second HAS message based on the HAS security context associated with the UE, thereby obtaining the second message.
G2. The method of embodiment G1, wherein the following applies: integrity protecting the first message and verifying integrity of the second HAS message is based on a second key (K_{HAS-int}) included in the HAS security context.
G2a. The method of embodiment G1a, wherein one or more of the following applies:
   encrypting the first message and decrypting the second HAS message is based on a first key (K_{HAS-enc}) included in the HAS security context; and
   integrity protecting the first message and verifying integrity of the second HAS message is based on a second key (K_{HAS-int}) included in the HAS security context.
G3. The method of any of embodiments G1-G2a, wherein the first NF of the HN is the AUSF and the method further comprises:
   performing a primary authentication with the UE, wherein K_{AUSF} and/or K_{SEAF} are obtained during or after the primary authentication; and
   deriving the following: the first key based on K_{SEAF}, and/or the second key based on K_{AUSF}.
G3a. The method of any of embodiments G1-G2a, wherein the first NF of the HN is the AUSF and the method further comprises:
   performing a primary authentication with the UE, wherein K_{AUSF} and/or K_{SEAF} are obtained during or after the primary authentication; and
   storing K_{SEAF}.
G3b. The method of any of embodiments G3-G3a, wherein one or more of the following applies:
   the first key is derived from a first intermediate key, with the first intermediate key being derived from K_{SEAF}; and
   the second key is derived from a second intermediate key, with the second intermediate key being derived from K_{AUSF}.
G3c. The method of any of embodiments G3-G3b, further comprising:
   receiving, from the SEAF of the SN, a request for primary authentication of the UE, wherein the request includes the following: a concealed identifier of the UE, and an indication of the UE's security capabilities; and
   in response to the request, storing the UE's security capabilities and performing the primary authentication with the UE.
G4. The method of embodiment G2-G2a, wherein the first NF of the HN is a home environment anchor function (HEAF) different from the AUSF, and the method further comprises:
   receiving the following from the AUSF of the HN:
      a primary security key (K_{HEAF}) for communication between the UE and the HEAF, or a key derived therefrom;
      K_{SEAF} or a key derived therefrom; and
      an indication of the UE's security capabilities; and
   deriving the following: the first key from K_{SEAF} or the key derived therefrom, and the second key from K_{HEAF} or the key derived therefrom.
G5. The method of any of embodiments G3-G4, further comprising:
   selecting from the UE's security capabilities the security algorithms to be used by the UE for HAS security; and
   sending, to a second NF of the SN, a HAS security mode command (SMC) for the UE, wherein the HAS SMC indicates the selected security algorithms.
G5a. The method of embodiment G5, wherein one or more of the following applies: the HAS SMC is not encrypted, and the HAS SMC is integrity protected based on the second key.
G5b. The method of any of embodiments G5-G5a, further comprising:
   receiving, from the UE via the second NF of the SN, an SMC complete message responsive to the SMC; and
   verifying integrity of the SMC complete message using the second key.
G5c. The method of any of embodiments G5-G5b, wherein the second NF of the SN is one of the following: the SEAF, or an access and mobility management function (AMF).
G6. The method of any of embodiments G1-G5c, wherein one or more of the following are accessible of the SN for lawful intercept (LI): the first message to the UE from the second NF of the HN, and the second message from the UE to the second NF of the SN.
G7. The method of any of embodiments G1-G6, wherein one or more of the following applies:
   the NF of the SN is an access and mobility management function (AMF) or a Session Management Function (SMF), and
   the first NF of the HN is the AUSF or a home environment anchor function (HEAF) different from the AUSF.
G8. The method of any of embodiments G1-G7, wherein one of the following applies: the SN is different from the HN, or the SN is the HN.
H1. A method performed by a user equipment (UE) configured with a home network (HN) and to operate in a serving network (SN), wherein the method comprises first operations and/or second operations, wherein:
   the first operations include the following:
      receiving, from a network function (NF) of the SN, a first home access stratum (HAS) message from a first network function (NF) of the HN, wherein the first HAS message includes a first message from a second NF of the HN; and
      verifying integrity of the first HAS message based on a HAS security context associated with the UE, thereby obtaining the first message from the second NF of the HN; and
   the second operations include the following:
      based on the HAS security context associated with the UE, integrity protecting a second message from the UE to the second NF of the HN, thereby obtaining a second HAS message; and
      sending the second HAS message to the NF of the SN,
   wherein the HAS security context is based on the following:
      a security key (K_{AUSF}) associated with an authentication server function (AUSF) of the HN, and/or
      a security key (K_{SEAF}) associated with a security anchor function (SEAF) of the SN.
H1a. The method of embodiment H1, wherein:
   the first operations for obtaining the first HAS message includes: decrypting and verifying integrity of the first HAS message based on a HAS security context associated with the UE, thereby obtaining the first message from the second NF of the HN; and/or
   the second operations for obtaining the second HAS message includes: based on the HAS security context associated with the UE, encrypting and integrity protecting a second message from the UE to the second NF of the HN, thereby obtaining a second HAS message
H2. The method of embodiment H1, wherein the following applies: integrity protecting the first message and verifying integrity of the second HAS message is based on a second key (K_{HAS-int}) included in the HAS security context.
H2a. The method of embodiment H1a, wherein one or more of the following applies:
   encrypting the first message and decrypting the second HAS message is based on a first key (K_{HAS-enc}) included in the HAS security context; and
   integrity protecting the first message and verifying integrity of the second HAS message is based on a second key (K_{HAS-int}) included in the HAS security context.
H2b. The method of any one of embodiment H2-H2a, further comprising:
   performing a primary authentication with the AUSF of the HN, thereby obtaining K_{AUSF} and/or K_{SEAF}; and
   deriving the following: the first key based on K_{SEAF}, and/or the second key based K_{AUSF}.
H2c. The method of embodiment H2b, wherein one or more of the following applies:
   the first key is derived from a first intermediate key, with the first intermediate key being derived from K_{SEAF}; and
   the second key is derived from a second intermediate key, with the second intermediate key being derived from K_{AUSF}.
H2d. The method of any of embodiments H2a-H2b, further comprising sending the following information to a second NF of the SN: a concealed identifier of the UE, and an indication of the UE's security capabilities; wherein the primary authentication is performed responsive to the information sent to the second NF.
H2e. The method of any of embodiments H2a-H2d, further comprising, after completion of the primary authentication, receiving, from the AUSF via the second NF of the SN, a HAS security mode command (SMC) that indicates security algorithms to be used by the UE for HAS security.
H2f. The method of embodiment H2d, wherein the indicated security algorithms are selected by the AUSF based on the indication of the UE's security capabilities.
H2g. The method of any of embodiments H2e-H2f, wherein one or more of the following applies: the HAS SMC is not encrypted, and the HAS SMC is integrity protected based on the second key.
H2h. The method of any of embodiments H2e-H2g, further comprising sending, to the AUSF via the second NF of the SN, an SMC complete message responsive to the SMC, wherein the SMC complete message is integrity protected using the second key.
H2i. The method of any of embodiments H2d-H2h, wherein the second NF of the SN is one of the following: the SEAF, or an access and mobility management function (AMF).
H3. The method of any of embodiments H1-H2i, wherein one or more of the following applies:
   the first HAS message is received in a first non-access stratum (NAS) message from the NF of the SN; and
   the second HAS message is sent in a second NAS message to the NF of the SN.
H3a. The method of embodiment H3, wherein the first NAS message is integrity protected based on a NAS security context associated with the UE, and the first operations also include verifying integrity of the first NAS message based on a NAS security context associated with the UE, thereby obtaining the first HAS message.
H3b. The method of any one of embodiment H3-H3a, wherein the first NAS message is encrypted and integrity protected based on a NAS security context associated with the UE, and the first operations also include decrypting and verifying integrity of the first NAS message based on a NAS security context associated with the UE, thereby obtaining the first HAS message.
H3c. The method of embodiment H3, wherein the second operations also include integrity protecting the second HAS message based on a NAS security context associated with the UE, thereby obtaining the second NAS message.
H3d. The method of embodiment H3c, wherein the second operations also include encrypting and integrity protecting the second HAS message based on a NAS security context associated with the UE, thereby obtaining the second NAS message.
H4. The method of any of embodiments H1-H3d, wherein one or more of the following are accessible of the SN for lawful intercept (LI): the first message to the UE from the second NF of the HN, and the second message from the UE to the second NF of the SN.
H5. The method of any of embodiments H1-H4, wherein one or more of the following applies:
   the NF of the SN is an access and mobility management function (AMF) or a Session Management Function (SMF), and
   the first NF of the HN is the AUSF or a home environment anchor function (HEAF) different from the AUSF.
H6. The method of any of embodiments H1-H5, wherein one of the following applies: the SN is different from the HN, or the SN is the HN.
J1. A method performed by a network function (NF) of a serving network (SN) for a user equipment (UE) configured with a home network (HN), the method comprising first or second operations, wherein:
   the first operations include the following:
      receiving, from a first NF of the HN, a first home access stratum (HAS) message that includes a first message to the UE from a second NF of the HN; and
      sending the first HAS message to the UE;
   the second operations include the following:
      receiving, from the UE, a second HAS message that includes a second message from the UE to the second NF of the HN; and
      sending the second HAS message to the first NF of the HN.
J2. The method of embodiment J1, wherein one or more of the following applies:
   the first HAS message is sent to the UE in a first non-access stratum (NAS) message;
      and
   the second HAS message is received from the UE in a second NAS message.
J2a. The method of embodiment J2, wherein the first operations also include integrity protecting the first HAS message based on a NAS security context associated with the UE, thereby obtaining the first NAS message.
J2b. The method of embodiment J2, wherein the first operations also include encrypting and integrity protecting the first HAS message based on a NAS security context associated with the UE, thereby obtaining the first NAS message.
J2c. The method of embodiment J2, wherein the second operations also include verifying integrity of the second NAS message based on a NAS security context associated with the UE, thereby obtaining the second HAS message.
J2d. The method of embodiment J2b, wherein the second operations also include decrypting and verifying integrity of the second NAS message based on a NAS security context associated with the UE, thereby obtaining the second HAS message.
J3. The method of any of embodiments J1-J2d, wherein the following applies:
   the first and second messages are integrity protected based on a second key (K_{HAS-int}) included in the HAS security context.
J3a. The method of any of embodiments J1-J2d, wherein one or more of the following applies:
   the first and second messages are encrypted based on a first key (K_{HAS-enc}) included in a HAS security context associated with the UE; and
   the first and second messages are integrity protected based on a second key (K_{HAS-int}) included in the HAS security context.
J3b. The method of embodiment J3, wherein one or more of the following applies:
   the first key is derived based on a security key (K_{SEAF}) associated with a security anchor function (SEAF) of the SN; and
   the second key is derived based on a security key (K_{AUSF}) associated with an authentication server function (AUSF) of the HN.
J3c. The method of embodiment J3b, wherein one or more of the following applies:
   the first key is derived from a first intermediate key, with the first intermediate key being derived from K_{SEAF}; and
   the second key is derived from a second intermediate key, with the second intermediate key being derived from K_{AUSF}.
J4. The method of any of embodiments J1-J3c, wherein one or more of the following are accessible of the SN for lawful intercept (LI): the first message to the UE from the second NF of the HN, and the second message from the UE to the second NF of the HN.
J5. The method of any of embodiments J1-J4, wherein one or more of the following applies:
   the NF of the SN is an access and mobility management function (AMF) or a Session Management Function (SMF), and
   the first NF of the HN is an authentication server function (AUSF) or a home environment anchor function (HEAF) different from the AUSF.
J6. The method of any of embodiments J1-J5, wherein one of the following applies: the SN is different from the HN, or the SN is the HN.
K1. Network equipment configured to implement a first network function (NF) of a home network (HN) for a user equipment (UE) configured to operate in a serving network (SN), the network equipment comprising:
   communication interface circuitry configured to communicate with NFs of the HN and of the SN; and
   processing circuitry operably coupled to the communication interface circuitry, wherein the processing circuitry and the communication interface circuitry are configured to perform operations corresponding to any of the methods of embodiments A1-A8, D1-D9, and G1-G8.
K2. Network equipment configured to implement a first network function (NF) of a home network (HN) for a user equipment (UE) configured to operate in a serving network (SN), the network equipment being further configured to perform operations corresponding to any of the methods of embodiments A1-A8, D1-D9, and G1-G8.
K3. Non-transitory, computer-readable medium storing computer-executable instructions that, when executed by processing circuitry of network equipment configured to implement a first network function (NF) of a home network (HN) for a user equipment (UE) configured to operate in a serving network (SN), configure the network equipment to perform operations corresponding to any of the methods of embodiments A1-A8, D1-D9, and G1-G8.
K4. Computer program product comprising computer-executable instructions that, when executed by processing circuitry of network equipment configured to implement a first network function (NF) of a home network (HN) for a user equipment (UE) configured to operate in a serving network (SN), configure the network equipment to perform operations corresponding to any of the methods of embodiments A1-A8, D1-D9, and G1-G8.
L1. User equipment (UE) configured with a home network (HN) and to operate in a serving network (SN), the UE comprising:
   communication interface circuitry configured to communicate with network functions (NFs) of the HN and of the SN; and
   processing circuitry operably coupled to the communication interface circuitry, wherein the processing circuitry and the communication interface circuitry are configured to perform operations corresponding to any of the methods of embodiments B1-B9, E1-E9, and H1-H6.
L2. User equipment (UE) configured with a home network (HN), the UE being further configured to perform operations corresponding to any of the methods of embodiments B1-B9.
L3. Non-transitory, computer-readable medium storing computer-executable instructions that, when executed by processing circuitry of user equipment (UE) configured with a home network (HN), configure the UE to perform operations corresponding to any of the methods of embodiments B1-B9, E1-E9, and H1-H6.
L4. Computer program product comprising computer-executable instructions that, when executed by processing circuitry of user equipment (UE) configured with a home network (HN), configure the UE to perform operations corresponding to any of the methods of embodiments B1-B9, E1-E9, and H1-H6.
M1. Network equipment configured to implement a network function (NF) of a serving network (SN) for a user equipment (UE) configured with a home network (HN), the network equipment comprising:
   communication interface circuitry configured to communicate with the UE and with a first NF of the HN; and
   processing circuitry operably coupled to the communication interface circuitry, wherein the processing circuitry and the communication interface circuitry are configured to perform operations corresponding to any of the methods of embodiments C1-C9, F1-F8, and J1-J6.
M2. Network equipment configured to implement a network function (NF) of a serving network (SN) for a user equipment (UE) configured with a home network (HN), the network equipment being further configured to perform operations corresponding to any of the methods of embodiments C1-C9, F1-F8, and J1-J6.
M3. Non-transitory, computer-readable medium storing computer-executable instructions that, when executed by processing circuitry of network equipment configured to implement a network function (NF) of a serving network (SN) for a user equipment (UE) configured with a home network (HN), configure the network equipment to perform operations corresponding to any of the methods of embodiments C1-C9, F1-F8, and J1-J6.
M4. Computer program product comprising computer-executable instructions that, when executed by processing circuitry of network equipment configured to implement a network function (NF) of a serving network (SN) for a user equipment (UE) configured with a home network (HN), configure the network equipment to perform operations corresponding to any of the methods of embodiments C1-C9, F1-F8, and J1-J6.

## Claims

1. A method performed by a first network function, NF, of a home network, HN, for a user equipment, UE, configured to operate in a serving network, SN, the method comprising:
receiving (1560), from an NF of the SN, a first home access stratum (HAS) message that includes a first message from the UE to a second NF of the HN;
performing (1570) at least one of decryption and integrity verification of the first HAS message based on a HAS security context associated with the UE, thereby obtaining the first message; and
sending (1580) the first message to the second NF of the HN,
wherein the HAS security context is based on a security key, K_{AUSF}, associated with an authentication server function, AUSF, of the HN.

2. The method of claim 1, further comprising deriving (1530) at least one of the following keys for the HAS security context:
a first key for HAS encryption and decryption;
a second key for HAS integrity protection and integrity verification; and
a third key for HAS encryption, decryption, integrity protection, and integrity verification.

3. The method of claim 2, wherein the first NF of the HN is a home environment anchor function, HEAF, the first message is sent together with an identifier of the UE, and the first HAS message is received in a request that also includes the identifier of the UE.

4. The method of claim 3, wherein the HAS security context includes a key, K_{HEAF}, derived from K_{AUSF} and one of the following derived from K_{HEAF}:
the first and second keys, based on which the at least one of decryption and integrity verification are performed; or
the third key, based on which the at least one of decryption and integrity verification are performed.

5. The method of any of claims 3-4, further comprising:
receiving (1585), from the second NF of the HN, a second response that includes the following: a response to the first message from the UE, and the identifier of the UE;
performing (1590) at least one of encryption and integrity protection of the second response based on the HAS security context associated with the UE, thereby obtaining a second HAS message; and
sending (1595) the second HAS message to the NF of the SN.

6. The method of claim 2, wherein the HAS security context is further based on a security key, K_{SEAF}, associated with a security anchor function, SEAF, of the SN, and one or more of the following applies: the decryption of the first HAS message is based on the first key, and the integrity verification of the first HAS message is based on the second key.

7. A method performed by a user equipment, UE, configured with a home network, HN, and to operate in a serving network, SN, the method comprising:
based on a home access stratum, HAS, security context associated with the UE, performing (1640) at least one of encryption and integrity protection of a first message from the UE to a second network function, NF, of the HN, thereby obtaining a first HAS message; and
sending (1660) the first HAS message to an NF of the SN,
wherein the HAS security context is based on a security key, K_{AUSF}, associated with an authentication server function, AUSF, of the HN.

8. The method of claim 7, wherein:
the first HAS message is sent in a first non-access stratum, NAS, message to the NF of the SN, and
the method further comprises performing (1650) at least one of encryption and integrity protection of the first HAS message based on a NAS security context associated with the UE, thereby obtaining the first NAS message

9. The method of any of claims 7-8, further comprising deriving (1620) at least one of the following keys for the HAS security context:
a first key for HAS encryption and decryption;
a second key for HAS integrity protection and integrity verification; and
a third key for HAS encryption, decryption, integrity protection, and integrity verification.

10. The method of claim 9, wherein the HAS security context includes a key, K_{HEAF}, derived from K_{AUSF} and one of the following derived from K_{HEAF}:
the first and second keys, based on which the at least one of encryption and integrity protection are performed; or
the third key, based on which the at least one of encryption and integrity protection are performed.

11. The method of any of claims 9-10, further comprising:
receiving (1670), from the NF of the SN, a second HAS message that includes a response to the first message from the UE; and
performing (1690) at least one of decryption and integrity verification of the second HAS message based on the HAS security context associated with the UE, thereby obtaining the response to the first message from the UE.

12. The method of claim 9, wherein the HAS security context is further based on a security key, K_{SEAF}, associated with a security anchor function, SEAF, of the SN, and the method further comprises performing (1610) a primary authentication with the AUSF of the HN, thereby obtaining K_{AUSF} and K_{SEAF}.

13. The method of any of claims 12, further comprising, after completion of the primary authentication, receiving (1625), from the AUSF via the second NF of the SN, a HAS security mode command, SMC, that indicates security algorithms to be used by the UE for HAS security.

14. A method performed by a network function, NF, of a serving network, SN, for a user equipment, UE, configured with a home network, HN, the method comprising:
receiving (1710), from the UE, a first HAS message that includes a first message from the UE to a second NF of the HN; and
sending (1730) the first HAS message to a first NF of the HN.

15. The method of claim 14, wherein the first HAS message is received from the UE in a first non-access stratum, NAS, message and the method further comprises performing (1720) at least one decryption and integrity verification of the first NAS message based on a NAS security context associated with the UE, thereby obtaining the first HAS message.

16. The method of any of claims 14-15, wherein the UE and the first NF of the HN are associated with a HAS security context includes at least one of the following keys:
a first key for HAS encryption and decryption;
a second key for HAS integrity protection and integrity verification; and
a third key for HAS encryption, decryption, integrity protection, and integrity verification.

17. The method of claim 16, wherein the first NF of the HN is a home environment anchor function, HEAF, and the first HAS message is sent in a request that also includes an identifier of the UE.

18. The method of any of claims 17, further comprising:
receiving (1740), from the first NF of the HN, a second HAS message that includes a second response to the first message from the UE; and
sending (1760) the second HAS message to the UE.

19. The method of claim 16, wherein one or more of the following applies:
the first key is derived based on a security key, K_{SEAF}, associated with a security anchor function, SEAF, of the SN; and
the second key is derived based on a security key, K_{AUSF}, associated with an authentication server function, AUSF, of the HN.

20. Network equipment (1808, 1932, 2100, 2200) configured to implement a first network function, NF (760, 930, 1030, 1230, 1430) of a home network, HN (750, 1802) for a user equipment, UE (910, 1010, 1210, 1410, 1812, 1912, 2000) configured to operate in a serving network, SN (700, 750, 1802), the network equipment being further configured to:
receive, from an NF (710, 920, 1020, 1220, 1420) of the SN, a first home access stratum, HAS, message that includes a first message from the UE to a second NF (1040, 1240, 1450) of the HN;
perform at least one of decryption and integrity verification of the first HAS message based on a HAS security context associated with the UE, thereby obtaining the first message; and
send the first message to the second NF of the HN,
wherein the HAS security context is based on a security key, K_{AUSF}, associated with an authentication server function, AUSF (930, 1230, 1440) of the HN.

21. User equipment, UE (910, 1010, 1210, 1410, 1812, 1912, 2000) configured with a home network, HN (750, 1802) and to operate in a serving network, SN (700, 750, 1802), the UE being further configured to:
based on a home access stratum, HAS, security context associated with the UE, perform at least one of encryption and integrity protection of a first message from the UE to a second network function, NF (1040, 1240, 1450) of the HN, thereby obtaining a first HAS message; and
send the first HAS message to an NF (710, 920, 1020, 1220, 1420) of the SN,
wherein the HAS security context is based on a security key, K_{AUSF}, associated with an authentication server function, AUSF (930, 1230, 1440) of the HN.

22. Network equipment (1808, 1932, 2100, 2200) configured to implement a network function, NF (710, 920, 1020, 1220, 1420) of a serving network, SN (700, 750, 1802) for a user equipment, UE (910, 1010, 1210, 1410, 1812, 1912, 2000) configured with a home network, HN (750, 1802), the network equipment being further configured to:
receive, from the UE, a first HAS message that includes a first message from the UE to a second NF of the HN; and
send the first HAS message to a first NF of the HN.
